(19) Europäisches Patentamt
European Patent Office
Office européen des brevets

(11) EP 4 693 513 A1

(12) EUROPEAN PATENT APPLICATION
published in accordance with Art. 153(4) EPC

(43) Date of publication:
**11.02.2026 Bulletin 2026/07**

(21) Application number: **24781168.0**

(22) Date of filing: **25.03.2024**

(51) International Patent Classification (IPC):
***H01M 4/62*** (2006.01) ***H01M 10/0567*** (2010.01)
***H01M 10/052*** (2010.01) ***H01M 4/02*** (2006.01)

(52) Cooperative Patent Classification (CPC):
**H01M 10/052; H01M 4/622; H01M 4/661; H01M 4/667; H01M 10/0525; H01M 10/0565; H01M 10/0567; H01M 10/0569;** H01M 2300/0085

(86) International application number:
**PCT/KR2024/003734**

(87) International publication number:
**WO 2024/205177 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039416**
**01.08.2023 KR 20230100644**

(71) Applicant: **SAMSUNG SDI CO., LTD.**
**Yongin-si, Gyeonggi-do 17084 (KR)**

(72) Inventors:
- **BAE, Woo Jin**
**Yongin-si, Gyeonggi-do 17084 (KR)**
- **MOON, Jong Seok**
**Yongin-si, Gyeonggi-do 17084 (KR)**
- **LEE, Kang Hee**
**Yongin-si, Gyeonggi-do 17084 (KR)**
- **WOO, Hyun Sik**
**Yongin-si, Gyeonggi-do 17084 (KR)**
- **PARK, Jong Seok**
**Yongin-si, Gyeonggi-do 17084 (KR)**
- **KIM, Hee Min**
**Yongin-si, Gyeonggi-do 17084 (KR)**
- **PARK, Jin Hwan**
**Yongin-si, Gyeonggi-do 17084 (KR)**

(74) Representative: **Michalski Hüttermann & Partner Patentanwälte mbB**
**Kaistraße 16A**
**40221 Düsseldorf (DE)**

# (54) LITHIUM BATTERY

(57) Disclosed are a binder, an anode having a protective layer comprising same, and a lithium battery comprising same, the binder comprising a third polymer, which is a crosslinking reaction product of at least one first polymer that has a first functional group and is selected from a polyamic acid and a polyimide in which fluorine is substituted, and a water-soluble second polymer that has a second functional group, wherein the first functional group and the second functional group react to form an ester bond such that the first polymer and the second polymer become crosslinked.

FIG. 1

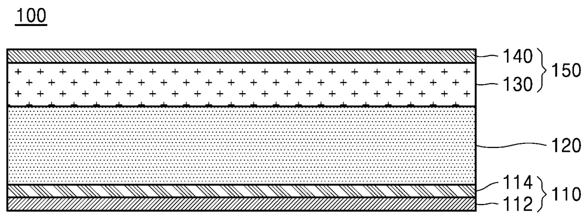


EP 4 693 513 A1

## Description

### Technical Field

One or more embodiments of the present disclosure relate to a lithium battery including an electrolyte and a protective layer.

### Background Art

In an anode-less lithium battery not including an anode or anode active material including lithium metal, a protective layer is applied to prevent or reduce dendrite formation and to ensure uniform (e.g., substantially uniform) ion-flux during dendrite formation.

As a protective layer, a polymer protective layer, an inorganic protective layer, or an organic/inorganic composite protective layer may be used, and most protective layers used had a thickness of 10 μm or more to ensure sufficient ion conductivity. However, as protective layers became thicker, lithium batteries including the same had a problem of lower current density.

To solve such a problem, a hybrid binder of polyimide and polyvinyl alcohol was applied to protective layers, but providing a stable SEI during initial electrodeposition was not easy.

Therefore, in an anode-less lithium battery not including an anode or anode active material including lithium metal, a protective layer and a binder for providing the protective layer are desired, the protective layer providing high initial efficiency and lifespan characteristics and improved electrode stability, and capable of suppressing or reducing changes in the volume of an electrode.

### Disclosure of Invention

### Technical Problem

One or more embodiments of the present disclosure include a lithium battery having improved initial capacity, lifespan characteristics, and electrode stability and including an electrolyte that includes a protective layer capable of suppressing or reducing volume changes in an electrode and an additive to improve ion conductivity and flame retardancy.

### Solution to Problem

According to one or more embodiments, a lithium battery includes:

an anode, a cathode, and an electrolyte between the anode and the cathode,
wherein the anode may include an anode current collector and a protective layer between the anode current collector and the electrolyte, and
the electrolyte may include a nitrile-based additive including two or more nitrile groups, and
the protective layer may have a modulus of 30 Gpa or more.

### Advantageous Effects of Invention

According to the one or more embodiments, an electrolyte includes two or more nitrile groups, and thus ionic conductivity and flame retardancy of a battery including the electrolyte may be improved. As a protective layer having a modulus of 30 Gpa or more is between an anode current collector and the electrolyte, side reactions between a nitrile-based additive and the anode current collector may be suppressed or reduced. In this regard, decomposition of the nitrile-based additive occurring during a charging and discharging process of a lithium battery may be suppressed or reduced, and a lithium including the electrolyte and the protective layer may have improved characteristics in terms of internal resistance, charging and discharging efficiency, lifespan, and electrode stability.

The lithium battery which includes the protective layer having a modulus of 30 Gpa or more may suppress or reduce volume changes.

### Brief Description of Drawings

FIG. 1 is a cross-sectional view of a lithium battery according to embodiments.

FIG. 2 is a cross-sectional view of a lithium battery according to embodiments.
FIG. 3 is a schematic view of a lithium battery according to embodiments.
FIG. 4 is a schematic view of a lithium battery according to embodiments.
FIG. 5 is a schematic view of a lithium battery according to embodiments.

## Mode for the Invention

Hereinafter, a lithium battery including both a protective layer and an electrolyte at the same time according to embodiments will be described in more detail.

Unless otherwise defined, all technical and scientific terms used in the present specification have the same meaning as commonly understood by those skilled in the art to which the disclosure belongs to. If the definitions in the present specification differ from the definitions understood by those skilled in the art to which the disclosure belongs to, the definitions in the present specification should be considered to have priority.

Although methods and materials similar or equivalent to those described herein can be used in the practice or testing of embodiments of the present disclosure, suitable methods and materials are described herein. An expression used in the singular encompasses the expression of the plural, unless it has a clearly different meaning in the context.

It will be further understood that the terms "comprises" or "includes" if used in the present specification, specify the presence of stated features, regions, integers, steps, operations, elements, and/or components, but do not preclude the presence or addition of one or more other features, regions, integers, steps, operations, elements, components, and/or groups thereof.

The term "a combination thereof" as used herein means a mixture or combination of one or more of the aforementioned elements.

The term "and/or" as used herein is meant to include any and all combinations of one or more of the items listed in relation thereto. The term "or" as used herein means "and/or". The expression "at least one" or "one or more" used in front of components in the present specification is meant to supplement a list of all components means, and does not imply to supplement individual components of the description.

In the drawings, thicknesses may be magnified and/or exaggerated to clearly illustrate various layers and regions. Like reference numbers may refer to like elements throughout the drawings and the following description. It will be understood that if one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element.

The term "metal" as used herein may include both metal and metalloid, such as silicon and germanium, in an elemental state or an ionic state.

The term "alloy" as used herein may refer to a mixture of two or more metals.

The term "cathode active material" as used herein may refer to a cathode material capable of undergoing lithiation and delithiation.

The term "anode active material" as used herein may refer to an anode material capable of undergoing lithiation and delithiation.

The terms "lithiation" and "lithiate" as used herein may refer to a process of adding lithium to a cathode active material or an anode active material.

The terms "delithiation" and "delithiate" as used herein may refer to a process of removing lithium from a cathode active material or an anode active material.

The terms "charging" and "charge" as used herein may refer to a process of providing electrochemical energy to a battery.

The terms "discharging" and "discharge" as used herein may refer to a process of eliminating electrochemical energy from a battery.

The terms "cathode" and "positive electrode" as used herein may refer to an electrode in which electrochemical reduction and lithiation occur during a discharge process.

The terms "anode" and "negative electrode" as used herein may refer to an electrode in which electrochemical oxidation and delithiation occur during a charge process.

The term "cross-link" as used herein may refer to a bond that connects one polymer chain to another polymer chain. In the present specification, a cross-linked bond may be a covalent bond. The term "linker or cross-linker" as used herein may refer to a functional group that connects one polymer chain to another polymer chain. The term "cross-linked polymer" as used herein may refer to a polymer in which one polymer chain and another polymer chain are linked via one or more linkers. The cross-linked polymer may be, for example, a product of a crosslinking reaction of one or more polymers.

The term "fluorine-substituted" as used herein may refer that any hydrogen included in a polymer is substituted with fluorine or a C1-C5 alkyl group substituted with fluorine.

[Lithium battery]

FIG. 1 is a cross-sectional view of a lithium battery according to embodiments. FIG. 2 is a cross-sectional view of a lithium battery according to other embodiments.

Referring to FIGS. 1-2, a lithium battery 100 may include: an anode 110; a cathode 150; and an electrolyte 120 between the anode 110 and the cathode 150, wherein the anode 110 may include: an anode current collector 112; and a protective layer 114 between the anode current collector 112 and the electrolyte 120, the electrolyte 120 may include a nitrile-based additive including two or more nitrile groups, and the protective layer 114 may have a modulus of 30 Gpa or more. For example, if the electrolyte 120 includes an additive including two or more nitrile groups, the electrolyte 120 may have improved ion conductivity and improved flame retardancy. The nitrile-based additive may be decomposed through a side reaction with the anode current collector 112 during a charging and discharging process of the lithium battery 100, but due to the protective layer 114 between the electrolyte 120 and the anode current collector 112 and having a modulus of 30 Gpa or more, the lithium battery 100 may prevent or reduce a side reaction between the anode current collector 112 and the nitrile-based additive. In this regard, the lithium battery 100 including the electrolyte 120 and the protective layer 114 may have improved characteristics in terms of internal resistance, capacity, and lifespan.

As long as the protective layer 114 has a modulus of 30 Gpa or more, changes in the volume of the lithium battery 100 may be suppressed or reduced.

For example, the modulus may be an indentation modulus, and may be measured by using a microindenter (DUH-211, Shimadzu). For example, the modulus may be calculated from the force applied to the tip from the protective layer depending on the distance the microindenter tip has traveled inside the protective layer.

[Electrolyte 120]

In an embodiment the electrolyte 120 may include a nitrile-based additive including two or more nitrile groups. If the electrolyte 120 includes such a nitrile-based additive including two or more nitrile groups, the ionic conductivity and flame retardancy may be improved. In this regard, the lithium battery 100 including the electrolyte 120 may have improved charging and discharging efficiency and improved lifespan characteristics.

For example, the nitrile-based additive may be represented by Formula 1:

Formula 1

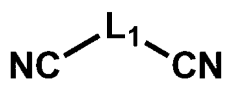

wherein $L_1$ in Formula 1 may be a C1 to C10 alkylene group.

In some embodiments, $L_1$ in Formula 1 may be a methylene group, an ethylene group, a propylene group, or a butylene group, each unsubstituted or substituted with a C1-C5 alkyl group. For example, $L_1$ in Formula 1 may be an ethylene group.

In some embodiments, the nitrile-based additive may include succinonitrile, acetonitrile, butyronitrile, and/or the like.

In some embodiments, an amount of the nitrile-based additive may be in a range of about 0.1 wt% to about 5 wt% based on a total weight of the electrolyte 120.

The electrolyte 120 may be, for example, a liquid-type or a gel-type.

The electrolyte 120 may be, for example, an organic electrolyte solution. The organic electrolyte solution may be, for example, prepared by dissolving a lithium salt in an organic solvent.

For use as the organic solvent, any suitable material available as an organic solvent in the art may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane,

chlorobenzene, nitrobenzene, diethylene glycol, dimethylether, or a mixture thereof.

In some embodiments, the organic solvent in the electrolyte 120 may be free (e.g., substantially free or completely free) of fluoroethylene carbonate (FEC).

For use as the lithium salt, any suitable material available as a lithium salt in the art may be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where $1 \leq x \leq 20$ and $1 \leq y \leq 20$), LiCl, LiI, or a mixture thereof. A concentration of the lithium salt may be, for example in a range of about 0.1 M to about 5.0 M.

The gel-type electrolyte may be, for example, a gel polymer electrolyte. The gel polymer electrolyte may include, for example, a liquid electrolyte and a polymer, or may be, for example, an electrolyte including an organic solvent and a polymer including an ion-conducting functional group.

The liquid-type electrolyte may contain, for example, ionic liquid, a mixture of a lithium salt and an organic solvent, a mixture of ionic liquid and an organic solvent, or a mixture of a lithium salt, ionic liquid, and an organic solvent.

The polymer of the gel-type electrolyte may include, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol(PEG), polyacrylonitrile (PAN), polytetrafluoro ethylene (PTFE), polyethylene dioxythiophene (PEDOT), polypyrrole (PPY), polyacrylonitrile (PAN), polyaniline, polyacetylene, nafion, aquivion, flemion, gore, aciplex, morgane ADP, sulfonated poly(ether ketone)(SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPA-$SLi^+$), or a combination thereof, but embodiments are not limited thereto. Any suitable material available as a polymer electrolyte in the art may be used as a polymer of the gel-type electrolyte.

The organic solvent in the gel-type electrolyte may be selected from organic solvents used in liquid electrolytes. For use as the lithium salt, any suitable material available as a lithium salt in the art may be used. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y may each be between 1 to 20), LiCl, LiI, or a mixture thereof.

The ionic liquid may have a melting point below the room temperature, and may contain a salt in a liquid state at room temperature or a molten salt at room temperature, each consisting of only ions.

The ionic liquid in the gel-type electrolyte may include, for example, one or more selected from compounds including: a) one or more cations selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) one or more anions selected from $BF_{4-}$, $PF_{6-}$, $AsF_{6-}$, $SbF_6$-, $AlCl_4$-, $HSO_4$-, $ClO_4$-, $CH_3SO_3$-, $CF_3CO_2$-, Cl-, Br-, I-, $SO_4$-, $CF_3SO_3$-, $(FSO_2)_2N$-, $(C_2F_5SO_2)_2N$-, $(C_2F_5SO_2)(CF_3SO_2)N$-, and $(CF_3SO_2)_2N$-.

For example, the gel polymer electrolyte may be formed by immersing a polymer within in an electrolyte solution within the lithium battery 100. The gel electrolyte may further include inorganic particles.

In some embodiments, the electrolyte 120 may further include a solid electrolyte.

The solid electrolyte may include, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may include at least one selected from $Li_{1+x+y}Al_xTi_{2-x}Si_yP_{3-y}O_{12}$ (where 0<x<2 and 0≤y<3), $BaTiO_3$, $Pb(Zr,Ti)O_3$ (PZT), $Pb_{1-x}La_xZr_{1-y}Ti_yO_3$ (PLZT) (where O≤x<1 and O≤y<1), $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (where 0<x<2 and 0<y<3), $Li_xAl_yTi_z(PO_4)_3$ (where 0<x<2, 0<y<1, and 0<z<3), $Li_{1+x+y}(Al, Ga)_x(Ti, Ge)_{2-x}Si_yP_{3-y}O_{12}$ (where 0≤x≤1 and 0≤y≤1), $Li_xLa_yTiO_3$ (where 0<x<2 and 0<y<3), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (where M may be Te, Nb, or Zr, and x may be an integer from 1 to 10). The solid electrolyte may be prepared by a sintering method and/or the like. For example, the oxide-based solid electrolyte may include a garnet-type solid electrolyte selected from $Li_7La_3Zr_2O_{12}$ (LLZO) and $Li_{3+x}La_3Zr_{2-a}M_aO_{12}$ (M-doped LLZO) (where M may be Ga, W, Nb, Ta, or Al, and x may be an integer from 1 to 10).

The sulfide-based solid electrolyte may include, for example, lithium sulfide, silicon sulfide, phosphorus sulfide, boron sulfide, or a combination thereof. Particles of the sulfide-based solid electrolyte may include $Li_2S$, $P_2S_5$, $SiS_2$, $GeS_2$, $B_2S_3$, or a combination thereof. The particles of the sulfide-based solid electrolyte particles may include $Li_2S$ and/or $P_2S_5$. The particles of the sulfide-based solid electrolyte particles have higher lithium ionic conductivity than other inorganic compounds. For example, the sulfide-based solid electrolyte may include $Li_2S$ and $P_2S_5$. If the sulfide solid electrolyte material constituting the sulfide-based solid electrolyte includes $Li_2S$-$P_2S_5$, a mixing molar ratio of $Li_2S$ to $P_2S_5$ may be, for example, in a range of about 50:50 to about 90:10. In some embodiments, an inorganic solid electrolyte prepared by

adding $Li_3PO_4$, halogen, halogen compounds, $Li_{2+2x}Zn_{1-x}GeO_4$ ("LISICON", $0 \leq x < 1$), $Li_{3+y}PO_{4-x}N_x$ ("LIPON", $0<x<4$, $0<y<3$), $Li_{3.25}Ge_{0.25}P_{0.75}S_4$ ("ThioLISICON"), $Li_2O-Al_2O_3-TiO_2-P_2O_5$ ("LATP"), and/or the like to an inorganic solid electrolyte of $Li_2S-P_2S_5$, $SiS_2$, $GeS_2$, $B_2S_3$, or a combination thereof, may be used as a sulfide solid electrolyte. Non-limiting examples of the sulfide solid electrolyte material are: $Li_2S-P_2S_5$; $Li_2S-P_2S_5-LiX$ (where X may be a halogen element); $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S-P_2S_5-Z_mS_n$ (where $0<m<10$, $0<n<10$, and Z may be Ge, Zn, or Ga); $Li_2S-GeS_2$; $Li_2S-SiS_2-Li_3PO_4$; and $Li_2S-SiS_2-Li_pMO_q$ (where $0<p<10$, $0<q<10$, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and/or the like. In some embodiments, a calcination process may be performed after the treatment. The sulfide-based solid electrolyte may be amorphous and/or crystalline, or may be in a mixed state.

The polymer solid electrolyte may include, for example, a mixture of a lithium salt and a polymer and/or a polymer including an ion-conducting functional group. The polymer solid electrolyte may be, for example, a polymer electrolyte not containing a liquid electrolyte. A polymer included in the polymer solid electrolyte may be selected from polymers used in gel-type electrolytes. The lithium salt may be selected from lithium salts used in gel-type electrolytes.

[Anode]

Referring to FIG. 1, the anode 110 may include an anode current collector 112 and a protective layer 114 between the anode current collector 112 and the electrolyte 120. Referring to FIG. 2, the anode 110 may further include a lithium metal layer between the anode current collector 112 and the protective layer 120. For example, referring to FIG. 1, the lithium battery 100 may be an anode-less lithium metal battery. For example, referring to FIG. 2, the lithium battery 100 may be an anode-less a lithium metal battery.

[Anode: Protective layer]

Referring to FIGS. 1-2, the anode 110 may include: the anode current collector 112; and the protective layer 114 between the anode current collector 112 and the electrolyte 120. A modulus of the protective layer 114 may be 30 Gpa or more.

For example, the modulus of the protective layer 114 may be in a range of about 30 Gpa to about 100 Gpa, about 30 Gpa to about 80 Gpa, about 30 Gpa to about 60 Gpa, about 30 Gpa to about 45 Gpa, about 32 Gpa to about 100 Gpa, about 34 Gpa to about 100 Gpa, or about 34 Gpa to about 45 Gpa. The modulus may be an indentation modulus.

In some embodiments, a thickness of the protective layer 114 may be 2 μm or less. The thickness of the protective layer 114 may be, for example, in a range of about 0.1 μm to about 2 μm, about 0.1μm to about 2 μm, about 0.1 μm to about 1.5 μm, about 0.1 μm to about 1.2 μm, about 0.1 μm to about 1.2 μm, or about 0.2 μm to about 1 μm. If the thickness of the protective layer 114 is within these ranges, decomposition of the electrolyte 120 may be effectively suppressed or reduced so that imbalance in local current density may be suppressed or reduced and production and/or growth of lithium dendrites may be effectively prevented or reduced. In this regard, the lithium battery 100 including the protective layer 114 may have further improved lifespan characteristics. If the thickness of the protective layer 114 increases excessively, the energy density of the lithium battery 100 may decrease.

A recovery of the protective layer 114 may be 60% or more. For example, the recovery of the protective layer 114 may be 65% or more. For example, the recovery of the protective layer 114 may be 67% or more. For example, the recovery of the protective layer 114 may be 70% or more.

For example, the "recovery" as described herein may be a ratio of the distance the tip travels back toward the surface of the protective layer 114 from the point at which the tip travels the farthest inside the protective layer 114 to the point at which the force applied to the tip becomes zero to the distance traveled by the tip inside the protective layer 114.

The protective layer 114 may have an indentation hardness of 1,400 $N/mm^2$ or more. For example, the indentation hardness of the protective layer 114 may be 1,500 $N/mm^2$ or more. For example, the indentation hardness of the protective layer 114 may be 1,550 $N/mm^2$ or more. For example, the indentation hardness of the protective layer 114 may be 1,600 $N/mm^2$ or more. For example, the indentation hardness of the protective layer 114 may be in a range of about 1,500 $N/mm^2$ to about 2,000 $N/mm^2$.

The protective layer 114 may have a swelling ratio of less than 10%. For example, the swelling ratio of the protective layer 114 may be calculated based on the mass change rates before and after impregnation of the protective layer 114 in the electrolyte solution for 24 hours. After impregnation, the electrolyte solution on the surface was removed, and the weight of the resulting protective layer 114 was measured within 5 minutes. For example, the swelling ratio (%) of the protective layer 114 may be calculated as a percentage of the mass (gram (g)) after impregnation minus the mass (gram (g)) before impregnation divided by the mass (gram (g)) after impregnation.

The swelling ratio (%) of the protective layer 114 may be less than 8%, less than 7%, less than 5%, less than 4%,

or less than 3%.

The protective layer 114 may have an extension of 0.8 mm or less. For example, the extension of the protective layer 114 may be measured from a distance the tip of the microindenter traveled inside the protective layer 114 until a certain force is applied to the tip. The extension of the protective layer 114 may be 0.5 mm or less or 0.4 mm or less.

The protective layer may have an ion conductivity at room temperature (25 °C) of 0.1 mS/cm or more and an ion conductivity at high temperature (45 °C) of 0.2 mS/cm or more. For example, the ion conductivity at room temperature (25 °C) of the protective layer 114 may be in a range of about 0.1 mS/cm to about 1 mS/cm, about 0.15 mS/cm to about 1 mS/cm, or about 0.2 mS/cm to about 1 mS/cm. For example, the ion conductivity at high temperature (45 °C) of the protective layer 114 may be in a range of about 0.2 mS/cm to about 1.2 mS/cm, about 0.22 mS/cm to about 1.2 mS/cm, about 0.24 mS/cm to about 1.2 mS/cm, or about 0.2 mS/cm to about 1 mS/cm.

The protective layer 114 may include a polymer binder.

For example, the polymer binder may include: one or more first polymers including a first functional group and selected from one or more fluorine-substituted polyamic acid and fluorine-substituted polyimide; and a third polymer which is a product of a crosslinking reaction of a water-soluble second polymer and includes a second functional group, wherein the first polymer and the second polymer are cross-linked by an ester bond formed by a reaction between the first functional group and the second functional group. The third polymer may be a cross-linked polymer of the first polymer and the second polymer. If the binder includes a third binder which is a cross-linked polymer formed by the ester bonds between the first polymer including fluorine and the second polymer, a lithium battery including an anode that includes the protective layer including the binder may be able to concurrently (e.g., simultaneously) provide excellent anode stability and suppression or reduction of anode volume expansion derived from fluorine-containing polyimide, and improved initial charging and discharging efficiency and lifespan characteristics.

In the binder, the first functional group and the second functional group included in the first polymer and the second polymer may each independently include one or more selected from a carboxyl group, a hydroxy group, an amide group, and an aldehyde group, but are not limited thereto, and any suitable material that allows the first functional group and the second functional group to react to form a cross-linked bond that includes the ester bond may be used. For example, the first functional group may be a carboxyl group (-COOH), and the second functional group may be a hydroxy group (-OH). The carboxyl group and the hydroxy group may react to form an ester crosslink. The first functional group in the first polymer may not be linked to a trivalent aromatic group included in the polyamic acid and the polyimide, but may be linked to a divalent aromatic group through a side chain.

Among the binders, the first polymer may include an alkali metal. The alkali metal may be sodium, lithium, and/or the like. The first polymer may be substituted or doped with the alkali metal. For example, in the polyamic acid, hydrogen of the carboxyl group linked to a trivalent aromatic group included in the polyamic acid may be substituted with an alkali metal ion. For example, in the polyimide, alkali metal ions may be doped to coordinate with an amide group. The initial charging and discharging efficiency may be improved by pre-lithiating the first polymer with the alkali metal.

The amount of the alkali metal included in the first polymer may be in a range of about 0.2 to about 1.0 in an equivalent ratio to the carboxyl group or the amide group. For example, the amount of the alkali metal included in the first polymer may be in a range of about 0.2 to about 0.8 in an equivalent ratio to the carboxyl group or the amide group. For example, the amount of the alkali metal included in the first polymer may be in a range of about 0.3 to about 0.7 in an equivalent ratio to the carboxyl group or the amide group. For example, the amount of the alkali metal included in the first polymer may be in a range of about 0.4 to about 0.6 in an equivalent ratio to the carboxyl group or the amide group. For example, the amount of the alkali metal included in the first polymer may be in a range of about 0.45 to about 0.55 in an equivalent ratio to the carboxyl group or the amide group. Within the alkali metal amount ranges above, further improved binder properties may be provided.

If the lithium amount of the polyamic acid, e.g., the degree of substitution of lithium ions, is less than 0.2 in an equivalent ratio to the carboxylic acid, the prelithiation rate may be low, and thus the effect of suppressing or reducing irreversibility in the first cycle may not be suitable or sufficient. If the lithium amount of the polyamic acid, e.g., the degree of substitution of lithium ions, is greater than 1.0 in an equivalent ratio to the carboxylic acid, the imidization rate may be significantly reduced, resulting in reduced lifespan characteristics. The lithium amount of the polyamic acid, e.g., the degree of substitution of lithium ions, may be obtained by adding an amount of LiOH used to lithiate the polyamic acid at a range of about 0.1 to about 1.0 in an equivalent ratio to the carboxylic acid of the polyamic acid.

For example, the polyimide may be represented by Formula 2 or Formula 3:

Formula 2

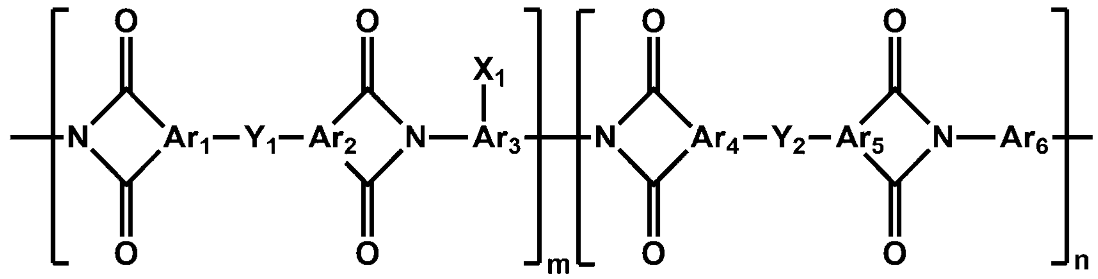

Formula 3

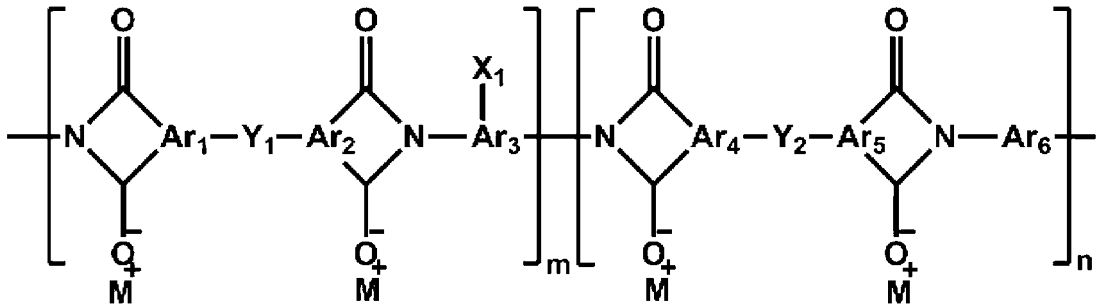

wherein, in Formulae 2 and 3,

M may be alkali metal,

$Ar_1$, $Ar_2$, $Ar_4$, and $Ar_5$ may each independently be an aromatic ring group selected from: a trivalent C6-C24 arylene group unsubstituted or substituted with a halogen or a C1-C10 alkyl group unsubstituted or substituted with a halogen; or a trivalent C4-C24 arylene group unsubstituted or substituted with a halogen or a C1-C10 alkyl group unsubstituted or substituted with a halogen, wherein the aromatic cyclic group may include one aromatic ring, two or more of aromatic rings fused to each other, or two or more of aromatic rings linked to each other via a single bond, -O-, -S-, -C(=O)-, $-S(=O)_2-$, or -Si(Ra)(Rb)-(wherein Ra and Rb may each independently be a C1-C10 alkyl group), a C1-C10 alkylene group unsubstituted or substituted with a halogen, or -C(=O)-NH-O,

$Ar_3$ and $Ar_6$ may each independently be an aromatic ring group selected from: a divalent C6-C24 arylene group unsubstituted or substituted with a halogen or a C1-C10 alkyl group unsubstituted or substituted with a halogen; or a divalent C4-C24 arylene group unsubstituted or substituted with a halogen or a C1-C10 alkyl group unsubstituted or substituted with a halogen, wherein the aromatic cyclic group may include one aromatic ring, two or more of aromatic rings fused to each other, or two or more of aromatic rings linked to each other via a single bond, -O-, -S-, -C(=O)-, $-S(=O)_2-$, -Si(Ra)(Rb)-(Ra and Rb may each independently be a C1-C10 alkyl group), a C1-C10 alkylene group unsubstituted or substituted with a halogen, or -C(=O)-NH-, $X_1$ may be -COOH, -OH, -CO, $-NH_2$, or -COH, $Y_1$ and $Y_2$ may each independently be a C1-C10 alkylene group substituted with fluorine; and n and m may each independently represent a mole fraction in a repeating unit and satisfy $0<n<1$, $0<m<1$, $n+m=1$.

For example, the polyimide may be represented by Formula 4 or Formula 5:

Formula 4

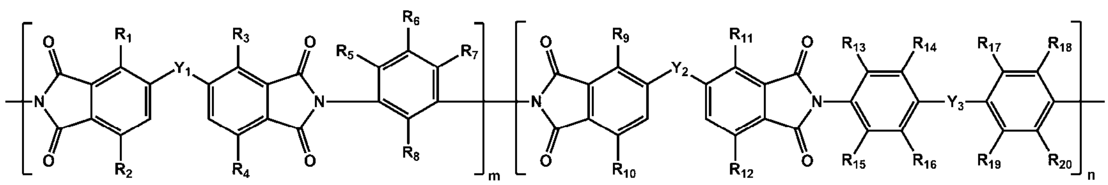

Formula 5

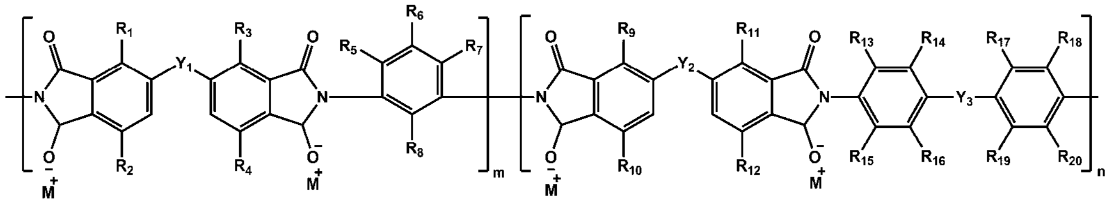

wherein, in Formulae 4 and 5,

M may be lithium or sodium,

$R_1$ to $R_{20}$ may each independently be: a halogen; -COOH; -OH; -CO-$NH_2$; -COH; a C1-C10 alkyl group substituted or unsubstituted a halogen; a C6-C20 aryl group substituted or unsubstituted a halogen; or a C2-C20 heteroaryl group unsubstituted or substituted with a halogen, wherein one or more of $R_5$ to $R_8$ may be -COOH, -OH, -CO-$NH_2$, or -COH, one or more of $R_{13}$ to $R_{20}$ may be a C1-C10 alkyl group substituted with fluorine, $Y_1$ to $Y_3$ may each independently be a single bond or a C1-C10 alkylene group substituted with fluorine; and n and m may each represent a mole fraction in a repeating unit and satisfy 0<n<1, 0<m<1, and n+m=1.

For example, the polyamic acid may be represented by Formula 8 or Formula 9:

Formula 8

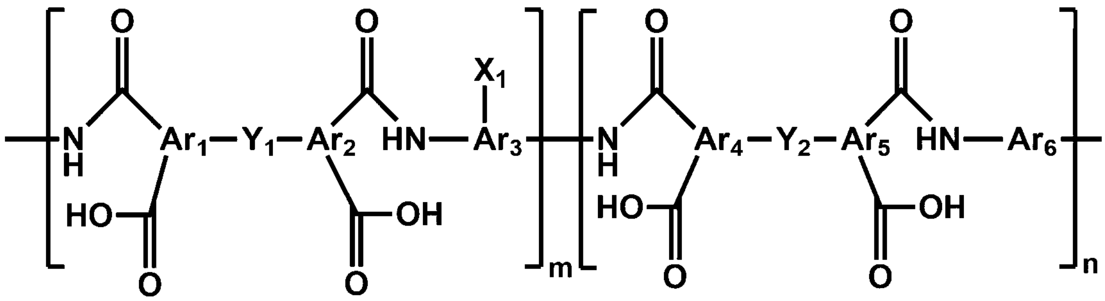

Formula 9

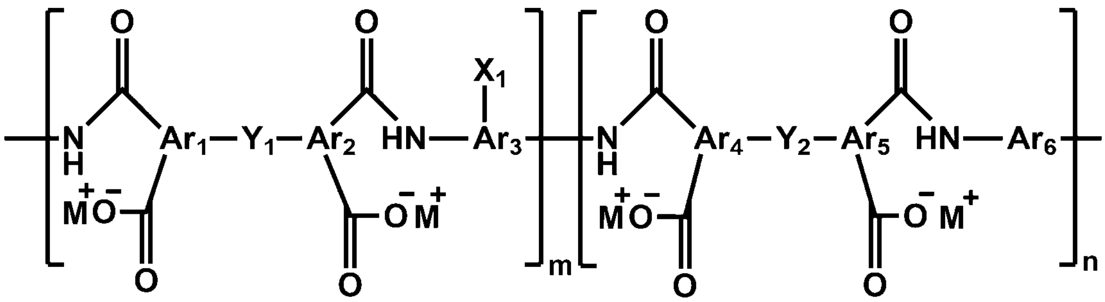

wherein, in Formulae 8 and 9,

M may be alkali metal,

$Ar_1$, $Ar_2$, $Ar_4$, and $Ar_5$ may each independently be an aromatic ring group selected from: a trivalent C6-C24 arylene group unsubstituted or substituted with a halogen or a C1-C10 alkyl group unsubstituted or substituted with a halogen; or a trivalent C4-C24 arylene group unsubstituted or substituted with a halogen or a C1-C10 alkyl group unsubstituted or substituted with a halogen, wherein the aromatic cyclic group may include one aromatic ring, two or more of aromatic rings fused to each other, or two or more of aromatic rings linked to each other via a single bond, -O-, -S-, -C(=O)-, -S(=O)$_2$-, or -Si(Ra)(Rb)-(wherein Ra and Rb may each independently be a C1-C10 alkyl group), a C1-C10 alkylene group unsubstituted or substituted with a halogen, or -C(=O)-NH-O,

$Ar_3$ and $Ar_6$ may each independently be an aromatic ring group selected from: a divalent C6-C24 arylene group unsubstituted or substituted with fluorine or a C1-C10 alkyl group unsubstituted or substituted with fluorine; or a divalent C4-C24 arylene group unsubstituted or substituted with fluorine or a C1-C10 alkyl group unsubstituted or

substituted with fluorine, wherein the aromatic cyclic group may include one aromatic ring, two or more of aromatic rings fused to each other, or two or more of aromatic rings linked to each other via a single bond, -O-, -S-, - C(=O)-, $-S(=O)_2-$, or -Si(Ra)(Rb)- (wherein Ra and Rb may each independently be a C1-C10 alkyl group), a C1-C10 alkylene group unsubstituted or substituted with fluorine, or -C(=O)-NH-O,

$X_1$ may be -COOH, -OH, $-CO-NH_2$, or -COH, $Y_1$ may be a C1-C10 alkylene group substituted with fluorine; and n and m may each be a mole fraction in a repeating unit and may satisfy $0<n<1$, $0<m<1$, and $n+m=1$.

For example, the polyamic acid may be represented by Formula 10 or Formula 11:

Formula 10

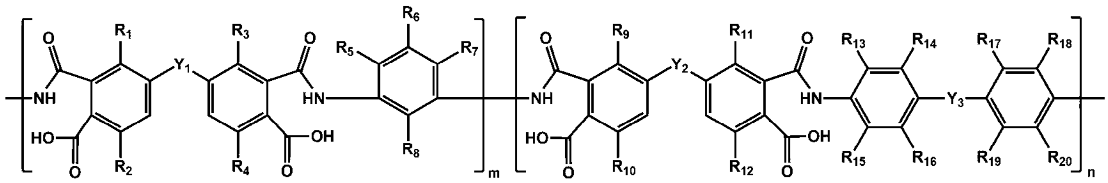

Formula 11

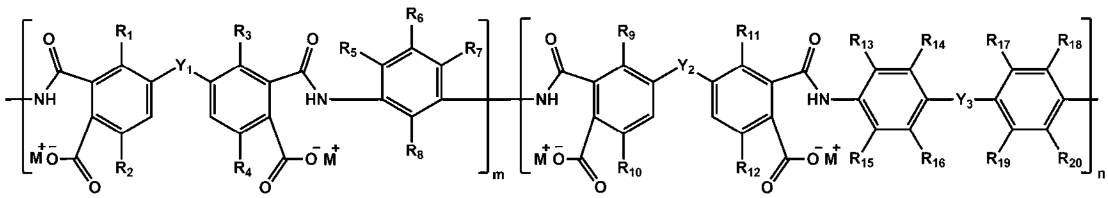

wherein, in Formulae 10 and 11,

M may be lithium or sodium,

$R_1$ to $R_{20}$ may each independently be: hydrogen; a halogen; -COOH; -OH; $-CO-NH_2$; -COH; a C1-C10 alkyl group substituted or unsubstituted a halogen; a C6-C20 aryl group substituted or unsubstituted a halogen; or a C2-C20 heteroaryl group unsubstituted or substituted with a halogen, wherein one or more of $R_5$ to $R_8$ may be -COOH, -OH, $-CO-NH_2$, or -COH, one or more of $R_{13}$ to $R_{20}$ may be a C1-C10 alkyl group substituted with fluorine, $Y_1$ to $Y_3$ may each independently be a single bond or a C1-C10 alkylene group substituted with fluorine; and n and m may each represent a mole fraction in a repeating unit and satisfy $0<n<1$, $0<m<1$, and $n+m=1$.

For example, in the binder, the polyimide may be represented by Formula 6 or Formula 7, and the polyamic acid may be represented by Formula 12 or Formula 13:

Formula 6

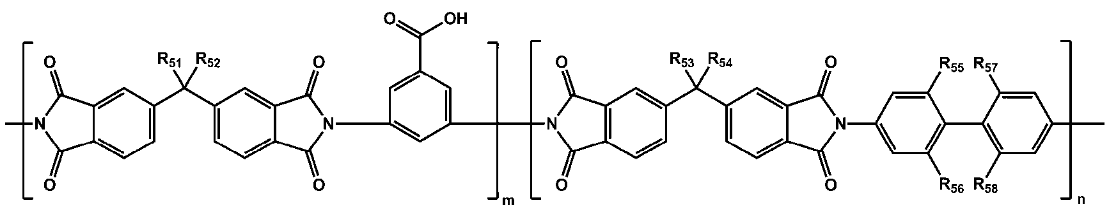

Formula 7

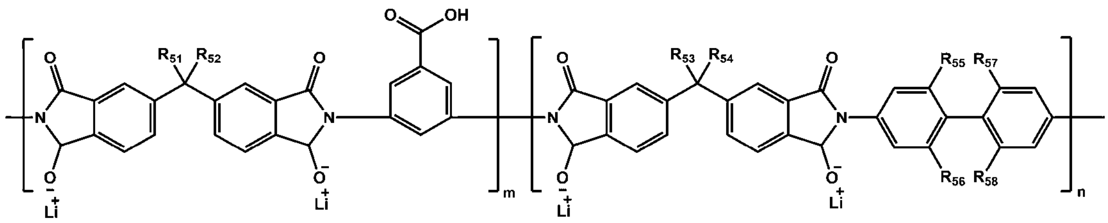

Formula 12

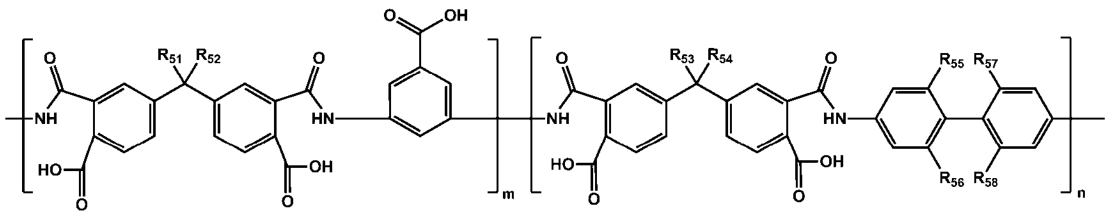

Formula 13

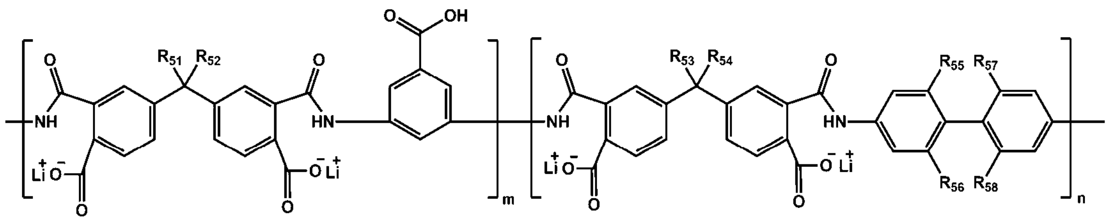

wherein, in Formulae 6, 7, 12, and 13,

$R_{51}$ to $R_{58}$ may each independently be a C1-C10 alkyl group unsubstituted or substituted with fluorine, wherein one or more of $R_{51}$ to $R_{58}$ may be a C1-C10 alkyl group substituted with fluorine, and n and m may each represent a mole fraction in a repeating unit and satisfy $0<n<1$, $0<m<1$, and $n+m=1$.

For example, in the first polymer represented by Formulae 2 to 13, the mole fractions of the repeating unit including a crosslinking group and the repeating unit not including a crosslinking group may each satisfy $0<m<0.5$, $0.5<n<1$, and $m+n=1$. For example, in the first polymer represented by Formulae 2 to 13, the mole fractions of the repeating unit including a crosslinking group and the repeating unit not including a crosslinking group may each satisfy $0.1<m<0.4$, $0.6<n<0.9$, and $m+n=1$. For example, in the first polymer represented by Formulae 2 to 13, the mole fractions of the repeating unit including a crosslinking group and the repeating unit not including a crosslinking group may each satisfy $0.15<m<0.35$, $0.65<n<0.85$, and $m+n=1$. For example, in the first polymer represented by Formulae 2 to 13, the mole fractions of the repeating unit including a crosslinking group and the repeating unit not including a crosslinking group may each satisfy $0.2<m<0.3$, $0.7<n<0.8$, and $m+n=1$. If the mole fraction is within the ranges above, the binder having further improved physical properties may be provided.

For example, the first polymer represented by Formulae 2 to 13 may be a random copolymer. For example, the first polymer represented by Formulae 2 to 13 may be a block copolymer.

The weight average molecular weight of the first polymer may be in a range of about 50,000 Dalton to about 1,500,000 Dalton. For example, the weight average molecular weight of the first polymer in the binder may be in a range of about 10,000 Dalton to about 1,100,000 Dalton. For example, the weight average molecular weight of the first polymer in the binder may be in a range of about 10,000 Dalton to about 1,000,000 Dalton. For example, the weight average molecular weight of the first polymer in the binder may be in a range of about 10,000 Dalton to about 500,000 Dalton. For example, the weight average molecular weight of the first polymer in the binder may be in a range of about 100,000 Dalton to about 500,000 Dalton. For example, the weight average molecular weight of the first polymer in the binder may be in a range of about 100,000 Dalton to about 400,000 Dalton. For example, the weight average molecular weight of the first polymer in the binder may be in a range of about 100,000 Dalton to about 300,000 Dalton. If the weight average molecular weight of the first polymer is within the ranges above, the physical properties of the binder may be further improved.

In the binder, the second polymer may be a polymerization reaction product or a hydrolyzate thereof of one or

more monomers selected from a vinyl-based monomer, an acetate-based monomer, an alcohol-based monomer, an acryl-based monomer, a methacryl-based monomer, an acrylamide-based monomer, and a methacrylamide-based monomer.

For example, the second polymer may be a polymerization reaction product or a hydrolyzate thereof of one or more monomers selected from vinylacetate, vinylalcohol, butyl (metha)acrylate, 2-hydroxyethyl (metha)acrylate, 2-hydroxypropyl (metha)acrylate, 4-hydroxybutyl (metha)acrylate, 6-hydroxyhexyl (metha)acrylate, 8-hydroxyoctyl (metha)acrylate, 2-hydroxyethyleneglycol (metha)acrylate, 2-hydroxypropyleneglycol (metha)acrylate, acrylic acid, methacrylic acid, 2-(metha)acryloyloxy acetic acid, 3-(metha)acryloyloxy propionic acid, 4-(meta)acryloyloxy butyric acid, itaconic acid, maleic acid, 2-isocyanatoethyl (metha)acrylate, 3-isocyanatopropyl (metha)acrylate, 4-isocyanatobutyl (metha)acrylate, (metha)acrylamide, ethylene di(metha)acrylate, diethyleneglycol(metha)acrylate, triethyleneglycol di(metha)acrylate, trimethylenepropanetri(metha)acrylate, trimethylenepropanetriacrylate, 1,3-butanediol(metha) acrylate, 1,6-hexanediol di(meta)acrylate, allyl acrylate, and N-vinyl caprolactam.

For example, the second polymer may be polyvinyl alcohol (PVA). For example, the polyvinyl alcohol may be a hydrolysate obtained by hydrolyzing polyvinyl acetate with alkali.

The polyvinyl alcohol may have a saponification degree in a range of about 60% to about 99%. For example, the saponification degree of the polyvinyl alcohol may be in a range of about 70% to about 95%. For example, the saponification degree of the polyvinyl alcohol may be in a range of about 75% to about 90%. For example, the saponification degree of the polyvinyl alcohol may be in a range of about 80% to about 90%. For example, the saponification degree of the polyvinyl alcohol may be in a range of about 85% to about 90%. If the saponification degree is within the ranges above, the binder having further improved physical properties may be provided.

The weight average molecular weight of the polyvinyl alcohol may be in a range of about 10,000 Dalton to about 500,000 Dalton. For example, the weight average molecular weight of the polyvinyl alcohol may be in a range of about 10,000 Dalton to about 500,000 Dalton. For example, the weight average molecular weight of the polyvinyl alcohol may be in a range of about 10,000 Dalton to about 400,000 Dalton. For example, the weight average molecular weight of the polyvinyl alcohol may be in a range of about 10,000 Dalton to about 300,000 Dalton. For example, the weight average molecular weight of the polyvinyl alcohol may be in a range of about 10,000 Dalton to about 200,000 Dalton. For example, the weight average molecular weight of the polyvinyl alcohol may be in a range of about 50,000 Dalton to about 150,000 Dalton. For example, the weight average molecular weight of the polyvinyl alcohol may be in a range of about 70,000 Dalton to about 100,000 Dalton. For example, the weight average molecular weight of the polyvinyl alcohol may be in a range of about 80,000 Dalton to about 100,000 Dalton. If the weight average molecular weight of the polyvinyl alcohol is within the ranges above, the physical properties of the binder may be further improved.

In the binder, the weight ratio of the first polymer to the second polymer included in the third polymer may be in a range of about 1:99 to about 50:50. For example, in the binder, the weight ratio of the first polymer to the second polymer included in the third polymer may be in a range of about 5:95 to about 45:55. For example, in the binder, the weight ratio of the first polymer to the second polymer included in the third polymer may be in a range of about 5:95 to about 40:60. For example, in the binder, the weight ratio of the first polymer to the second polymer included in the third polymer may be in a range of about 5:95 to about 35:65. For example, in the binder, the weight ratio of the first polymer to the second polymer included in the third polymer may be in a range of about 10:90 to about 30:70. If the weight ratio of the first polymer to the second polymer is within the ranges above, the physical properties of the binder may be further improved.

The crosslinking reaction in the binder may be performed at a temperature of 100 °C or more. For example, the crosslinking reaction may be performed by heat treating a composition including the first polymer and the second polymer at a temperature of 100 °C or more. For example, the crosslinking reaction may be performed by heat treating a composition including the first polymer and the second polymer at a temperature of 120 °C or more. For example, the crosslinking reaction may be performed by heat treating a composition including the first polymer and the second polymer at a temperature of 140 °C or more. For example, the crosslinking reaction may be performed by heat treating a composition including the first polymer and the second polymer at a temperature of 160 °C or more. If the crosslinking reaction is performed at a temperature within the ranges above, a cross-linked polymer may be produced.

If the crosslinking reaction in the binder is performed at a temperature of 100 °C or more, the polyamic acid may be cured into polyimide. For example, the imidation rate of the polyamic acid may be 60% or more. For example, the imidation rate of the polyamic acid may be 70% or more. For example, the imidation rate of the polyamic acid may be 80% or more. For example, the imidation rate of the polyamic acid may be 90% or more. The imidation rate of the polyamic acid may be obtained based on $^1$H-NMR. If the polyamic acid is cured into polyimide in the binder, the mechanical properties of the binder may be further improved.

The polyamic acid may have an acid equivalent weight of less than 300 g/eq. For example, the acid equivalent weight of the polyamic acid may be in a range of about 50 g/eq to about 250 g/eq. If the acid equivalent weight of the polyamic acid is lowered to less than 300 g/eq, the amount of carboxy group and/or carboxylate per unit mass may increase. If the amount of carboxy group and/or carboxylate per unit mass increases, and for example, if a silicon-based anode active material is used as an anode material, the interaction between the anode active material with hydroxy groups

on the surface and the binder may increase, thereby improving the binding force with the anode active material. If the acid equivalent weight is 300 g/eq or more, the initial efficiency and lifespan characteristics of the lithium battery may be lowered.

In the binder, the third polymer which is a cross-linked polymer may have a three-dimensional cross-linked network structure in which a plurality of the first polymers and a plurality of the second polymer may be cross-linked via linkers or crosslinkers. If the third polymer has such a network structure, volume changes during charging and discharging of an electrode including the binder may be suppressed or reduced.

The weight average molecular weight of the third polymer in the binder may be in a range of about 10,000 Dalton to about 1,500,000 Dalton. For example, the weight average molecular weight of the third polymer in the binder may be in a range of about 10,000 Dalton to about 1,200,000 Dalton. For example, the weight average molecular weight of the third polymer in the binder may be in a range of about 10,000 Dalton to about 1,100,000 Dalton. For example, the weight average molecular weight of the third polymer in the binder may be in a range of about 10,000 Dalton to about 1,000,000 Dalton. For example, the weight average molecular weight of the third polymer in the binder may be in a range of about 10,000 Dalton to about 500,000 Dalton. For example, the weight average molecular weight of the third polymer in the binder may be in a range of about 100,000 Dalton to about 500,000 Dalton. For example, the weight average molecular weight of the third polymer in the binder may be in a range of about 100,000 Dalton to about 400,000 Dalton. For example, the weight average molecular weight of the third polymer in the binder may be in a range of about 100,000 Dalton to about 300,000 Dalton. If the weight average molecular weight of the third polymer is within the ranges above, the physical properties of the binder may be further improved.

For example, in the binder, the third polymer may be represented by one selected from Formulae 14 to 17:

Formula 14

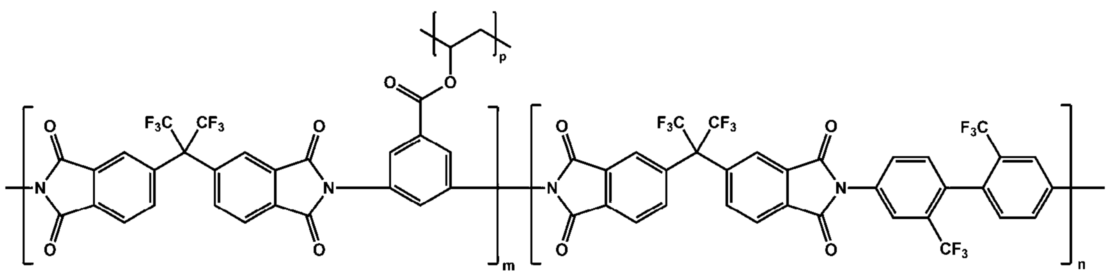

Formula 15

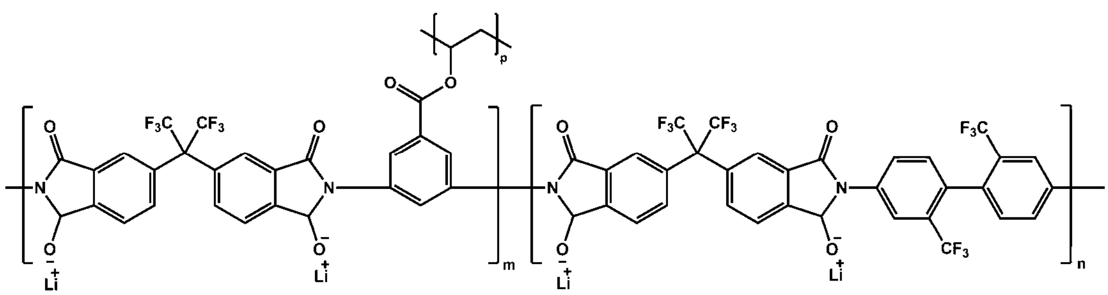

Formula 16

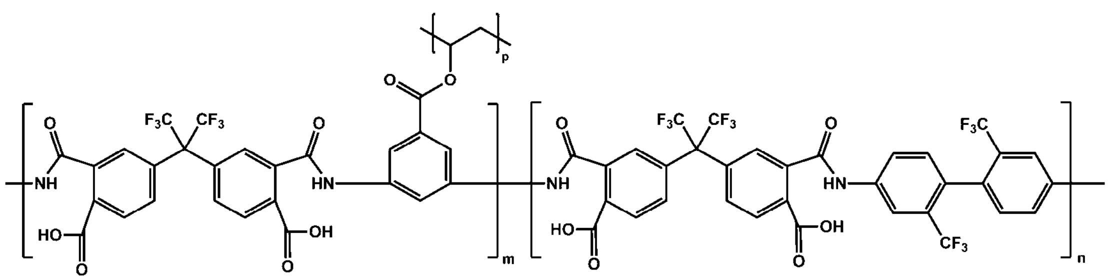

Formula 17

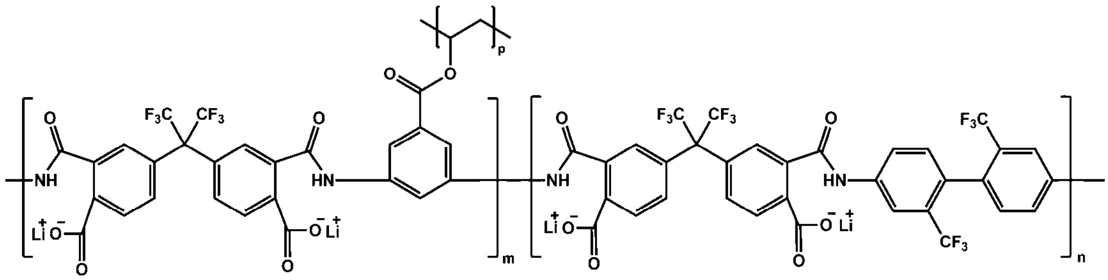

wherein, in the formulae above, n and m may each represent a mole fraction in a repeating unit and satisfy 0<n<1, 0<m<1, and n+m=1, and p may be a degree of polymerization in a range of about 250 to about 12,500.

For example, the binder included in the protective layer 114 may further include a water-soluble fourth polymer selected from cellulose hydroxyethyl ether, dextran, carboxymethyl cellulose (CMC), alginate, cellulose nanofiber, xanthan gum, and guar gum. If the binder additionally includes the fourth polymer, the physical properties of the binder may be adjusted in various suitable ways.

The binder may be, for example, used in an electrochemical cell. The binder may be, for example, used in a protective layer included in an electrochemical battery. Types (or kinds) of an electrochemical battery are not limited as long as it is a device that can store energy through an electrochemical reaction, may include both a primary battery and a secondary battery. Such an electrochemical battery may include, for example, an alkali metal battery, such as a lithium battery and/or a sodium battery, an alkali earth metal battery, such as a magnesium battery, a metal air battery, a supercapacitor, a fuel battery, and/or the like.

The protective layer 114 according to embodiments may be prepared by curing a composition for providing a protective layer, which will be further described below.

The composition for providing a protective layer may include the first polymer and the second polymer. The protective layer 114 may be, for example, formed by applying the composition for providing a protective layer onto the anode current collector 112 and curing the same at a temperature of 100 °C or more.

The protective layer 114 may be, for example, formed by applying the composition for providing a protective layer onto the anode current collector 112 and curing the same at a temperature of 100 °C or more for about 1 hour to about 10 hours. The protective layer 114 may be, for example, formed by applying the composition for providing a protective layer onto the anode current collector 112 and curing the same at a temperature of 160 °C or more for about 1 hour to about 10 hours.

The protective layer 114 may further include a conductive material (e.g., an electrically conductive material).

For use as the conductive material, carbon black, graphite particulates, natural graphite, artificial graphite, acetylene black, ketjen black, and/or carbon fibers; carbon nanotubes; metallic powder, metallic fibers, and/or metallic tubes of copper, nickel, aluminum, silver, and/or the like; a conductive polymer such as a polyphenylene derivative, and/or the like may be used. However, embodiments are not limited thereto, and any suitable conductive material available in the art may be used.

The protective layer 114 may further include a lithium salt.

The lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, LiTFSi, $LiAlO_2$, $LiAlCl_4$, $LiN(C_xF_{2x+1}SO_2)(C_yF_{2y+1}SO_2)$ (where $1 \leq x \leq 20$ and $1 \leq y \leq 20$), LiCl, LiI, or a mixture thereof.

Anode: anode current collector

For example, a material providing the electrode current collector 112 may be a material that does not (or that substantially does not) react with lithium, e.g., any suitable material that does not form an alloy or a compound with lithium and has conductivity (e.g., electrical conductivity). A metal substrate may be, for example, a metal and/or an alloy. The metal substrate may include or consist of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The electrode current collector may have, for example, a shape selected from a sheet, a foil, a film, a plate, a porous body, a mesoporous body, a through-hole containing body, a polygonal ring body, a meshed body, a foaming body, and/or a non-woven body, but is not limited thereto. Any suitable shape available in the art may be used.

For example, the anode current collector 112 may have a reduced thickness compared to an anode current collector included in an anode of the art. Accordingly, the anode disclosed herein which includes, for example, a thin-film current collector, may be distinguished from an electrode of the related art which includes a thick-film current collector. If an electrode according to embodiments includes a thin-film current collector having a reduced thickness, a thickness of an

electrode active material layer in the anode including the thin-film current collector may relatively increase. Consequently, a lithium metal battery including such an electrode may have an increased energy density. The anode current collector 112 may have, for example, a thickness of less than 15 μm, 14.5 μm or less, or 14 μm or less. The thickness of the anode current collector 112 may be, for example, in a range of about 0.1 μm to less than about 15 μm, about 1 μm to about 14.5 μm, about 2 μm to about 14 μm, about 3 μm to about 14 μm, about 5 μm to about 14 μm, or about 10 μm to about 14 μm.

A material for providing the anode current collector 112 may be a material that does not (or that substantially does not) react with lithium, e.g., any suitable material that does not form an alloy or a compound with lithium and has conductivity (e.g., electrical conductivity). The anode current collector 112 may be, for example, a metal and/or an alloy. The anode current collector 112 may include or consist of, for example, In, Cu, Mg, stainless steel, Ti, Fe, Co, Ni, Zn, Al, Ge, Li, and/or an alloy thereof.

The anode current collector 112 may have, for example, a shape selected from a sheet, a foil, a film, a plate, a porous body, a mesoporous body, a through-hole containing body, a polygonal ring body, a meshed body, a foaming body, and a non-woven body, but is not limited thereto. Any suitable shape available in the art may be used.

The anode current collector 112 may include, for example, a base film and a metal substrate layer on one side or two opposing sides of the base film. The anode current collector 112 may include a substrate, and the substrate may have, for example, a structure including a base film and a metal substrate layer on one side or two opposing sides of the base film. An interlayer may be on the metal substrate layer.

For example, the base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. If the base film includes a thermoplastic polymer, the base film may be melted upon the occurrence of a short circuit, and thus a rapid increase in current may be suppressed or reduced. The base film may be, for example, an insulator (e.g., an electrical insulator). The metal substrate layer may include, for example, Cu, stainless steel, Ti, Fe, Co, Ni, and/or an alloy thereof. The metal substrate layer may act as an electrochemical fuse, and thus may be cut in the event of an overcurrent to perform a short circuit prevention function. By adjusting the thickness of the metal substrate layer, a limit current and a maximum current may be adjusted. The metal substrate layer may be plated and/or deposited on the base film. If the thickness of the metal substrate layer decreases, the limit current and/or the maximum current of the anode current collector 112 may decrease, and thus the stability of a lithium metal battery may be improved. A lead tab may be added on the metal substrate layer for the connection with the outside. The lead tab may be welded to the metal substrate layer or a laminate of metal substrate layer/base film by ultrasonic welding, laser welding, spot welding, or the like. The metal substrate layer may be electrically connected to the lead tab while the base film and/or the metal substrate layer melts during welding. A metal chip may be added between the metal substrate layer and the lead tab for stronger welding therebetween. The metal chip may be a thin piece of the same material as the metal in the metal substrate layer. The metal chip may be, for example, a metal foil and/or a metal mesh. The metal chip may be, for example, an Al foil, a Cu foil, and/or an SUS foil. By welding the lead tab after providing the metal chip on the metal substrate layer, the lead tab may be welded to a laminate of metal chip/metal substrate layer or a laminate of metal chip/metal substrate layer/base film. During the welding, the metal layer or the laminate of metal substrate layer/metal chip may melt so that the metal substrate layer and/or the laminate of metal substrate layer/metal chip may be electrically connected to the lead tab. The metal chip and/or the lead tab may be added to a portion on the metal substrate layer. The thickness of the base film may be, for example, in a range of about 1 μm to about 50 μm, about 1.5 μm to about 50 μm, about 1.5 μm to about 40 μm, or about 1 μm to about 30 μm. If the thickness of the base film is within the ranges above, the weight of an anode assembly may be reduced more effectively. The melting point of the base film may be, for example, in a range of about 100 °C to about 300 °C, about 100 °C to about 250 °C, or about 100 °C to about 200 °C. If the melting point of the base film is within the ranges above, the base film may be melted and easily connected to the lead tab in the process of welding the lead tab. To improve the adhesion between the base film and the metal substrate layer, a surface treatment such as a corona treatment may be performed on the base film. The thickness of the metal substrate layer may be, for example, in a range of about 0.01 μm to about 3 μm, about 0.1 μm to about 3 μm, about 0.1 μm to about 2 μm, or about 0.1 μm to about μm. If the thickness of the metal substrate layer is within the ranges above, the stability of an anode assembly may be secured while maintaining the conductivity (e.g., electrical conductivity). The thickness of the metal chip may be, for example, in a range of about 2 μm to about 10 μm, about 2 μm to about 7 μm, or about 4 μm to about 6 μm. If the thickness of the metal chip is within the ranges above, the connection between the metal layer and the lead tab may be established more easily. If the anode current collector 112 has the aforementioned structure, the weight of the electrode may be reduced, and consequently, the energy density of the lithium battery 100 may be improved.

Referring to FIG. 1, an anode active material layer may be free on the anode current collector 112 before charging and discharging (e.g., the anode current collector 112 may be substantially free or completely free of an anode active material layer before charging and discharging). For example, an anode active material layer may be free on the anode current collector 112 after charging and discharging (e.g., the anode current collector 112 may be substantially free or completely free of an anode active material layer after charging and discharging). For example, in an anode-less lithium

metal battery in which an anode active material layer and/or a lithium metal layer is free on the anode current collector 112 before charging and discharging (e.g., the anode current collector 112 may be substantially free or completely free of an anode active material layer and/or a lithium metal layer before charging and discharging), formation of dendrites may be prevented or reduced so that lifespan characteristics may be further improved.

Referring to FIG. 2, a lithium metal layer 116 including a plate-shaped lithium metal thin film may be on the anode current collector 112 before charging and discharging. For example, the lithium metal layer 116 may be between the anode current collector 112 and the protective layer 114.

In some embodiments, the anode may further include an interlayer between the anode current collector 112 and the lithium metal layer 116.

In some embodiments, an interlayer may be, for example, directly on one side or two opposing sides of the anode current collector 112. In this regard, other layers may not be between the electrode current collector 112 and the interlayer. If the interlayer is directly on one side or two opposing sides of the anode current collector 112, the binding force between the anode current collector 112 and the lithium metal layer 116 may be further improved.

A thickness of the interlayer may be, for example, 30% or less of the thickness of the anode current collector 112. The thickness of the interlayer may be, for example, in a range of about 0.01% to about 30%, about 0.1% to about 30%, about 0.5% to about 30%, about 1% to about 25%, about 1% to about 20%, about 1% to about 15%, about 1% to about 10%, about 1% to about 5%, or about 1% to about 3%, of the thickness of the anode current collector 112. The thickness of the interlayer may be, for example, in a range of about 10 nm to about 5 $\mu$m, about 50 nm to about 5 $\mu$m, about 200 nm to about 4 $\mu$m, about 500 nm to about 3 $\mu$m, about 500 nm to about 2 $\mu$m, about 500 nm to about 1.5 $\mu$m, or about 700 nm to about 1.3 $\mu$m. If the thickness of the interlayer is within the ranges above, the binding force between the anode current collector 112 and the metal layer 116 may be further improved, and accordingly, an increase in the interfacial resistance may be suppressed or reduced.

For example, the interlayer may include a binder. If the interlayer includes a binder, the binding force between the anode current collector 112 and the lithium metal layer 116 may be further improved. The binder included in the interlayer may be, for example, a conductive binder or a nonconductive binder.

The conductive binder may be, for example, an ion conductive binder and/or an electron conductive binder (e.g., an electrically conductive binder). The binder may be a binder having both ion conductivity and electron conductivity, which may be considered both an ion conductive binder and an electron conductive binder.

Examples of the ion conductive binder include polystyrene sulfonate (PSS), a polyvinylidene fluoride-hexafluoropropylene (PVDF-HFP) copolymer, polyvinyl fluoride (PVF), polyvinylidene fluoride (PVDF), poly(methyl methacrylate) (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPY), polyacrylonitrile (PAN), polyaniline, polyacetylene, and the like. The ion conductive binder may include a polar functional group. Examples of the ion conductive binder including a polar functional group include Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)], (SPBIBI), poly(styrene sulfonate) (PSS), lithium 9,10-diphenylanthracene-2-sulfonate ($DPASLi^+$), and the like. Examples of the electron conductive binder include polyacetylene, polythiophene, polypyrrole, poly(p-phenylene), poly(phenylenevinylene), poly(phenylenesulfide), polyaniline, and the like. The interlayer may be, for example, a conductive layer (e.g., an electrically and/or ionically conductive layer) including a conductive polymer(e.g., an electrically and/or ionically conductive polymer).

The binder included in the interlayer may be, for example, a fluorine-based binder. The fluorine-based binder included in the interlayer may be, for example, polyvinylidene fluoride (PVDF). The interlayer may be, for example, provided on the anode current collector 112 by a dry method or a wet method. The interlayer may be, for example, a bonding layer including a binder.

The interlayer may further include, for example, a carbon-based conductive material (e.g., a carbon-based electrically conductive layer). If the interlayer includes the carbon-based conductive material, the interlayer may become, for example, a conductive layer (e.g., an electrically conductive layer). The interlayer may be, for example, a conductive layer including a binder and a carbon-based conductive material.

The interlayer may be, for example, provided on the anode current collector 112 by a dry method such as deposition, e.g., CVD, PVD, and/or the like. The interlayer may be, for example, provided on the anode current collector 112 by a wet method, such as spin coating, dip coating, and/or the like. The interlayer may be, for example, provided on the anode current collector 112 by depositing a carbon-based conductive material (e.g., a carbon-based electrically conductive material) on the anode current collector 112. A dry-coated interlayer may include or consist of a carbon-based conductive material (e.g., a carbon-based electrically conductive layer), and may not include a binder. In some embodiments, the interlayer may be, for example, provided on the anode current collector 112 by applying a composition including a carbon-based conductive material (e.g., a carbon-based electrically conductive layer), a binder, and a solvent onto the surface of the anode current collector 112 and drying the same. The interlayer may have a single-layer structure, or may be a multi-layer structure including multiple layers.

[Anode: lithium metal layer]

Referring to FIG. 2, the lithium battery 100 may further include the lithium metal layer 116 between the anode current collector 112 and the electrolyte 120. For example, the lithium metal layer 116 may include a lithium metal and/or a lithium alloy. For example, the lithium metal layer 116 may be an anode active material layer. For example, the lithium metal layer 116 may be a lithium electrodeposition layer.

For example, the lithium metal layer 116 may be produced by electrodeposition of lithium ions included in the electrolyte 120 on the anode current collector 112 as the lithium battery 100 is charged. For example, the lithium metal layer 116 may include a lithium alloy and a lithium metal. For example, the lithium alloy included in the lithium metal layer 116 may weaken the reactivity of the lithium metal, and thus a side reaction between the lithium metal layer 116 and the polymer electrolyte 120 may be effectively prevented or reduced. The lithium metal layer 116 may also have excellent electrical conductivity, and thus the lithium battery 100 including the same may have reduced internal resistance. In this regard, the lithium battery 100 including the lithium metal layer 116 may improve not only lifespan characteristics but also charging and discharging efficiency. In some embodiments, the lithium metal layer 116 may include only electrodeposited lithium metal and/or metal alloy. In this regard, the lithium metal layer 116 may be a lithium electrodeposition layer.

In some embodiments, the lithium metal layer 116 may include, for example, lithium foil, lithium powder, plated lithium, a carbon-based material, or a combination thereof. For example, the lithium metal layer 116 may include lithium foil. In this regard, the lithium metal layer 116 may be an anode active material layer. For example, the lithium metal layer 116 may be introduced by coating the anode current collector 112 with a slurry including lithium powder, a binder, and/or the like. For example, the binder may be a fluorine-based binder such as polyvinylidene fluorine (PVDF).

In some embodiments, the lithium metal layer 116 may not include a carbon-based anode active material. In this regard, the lithium metal layer 116 may include or consist of a metal-based anode active material.

For example, the lithium metal layer 116 may have a thickness of, for example, in a range of about 0.1 μm to about 100 μm, about 0.1 μm to about 80 μm, about 1 μm to about 80 μm, or about 10 μm to about 80 μm. However, the thickness is not necessarily limited within the ranges above, and may be adjusted depending on the type (or kind), capacity, and/or the like of the lithium battery. If the thickness of the lithium metal layer 116 significantly increases, the structural stability of the lithium battery 100 may decrease, and side reactions may increase. If the thickness of the lithium metal layer 116 significantly decreases, the energy density of the lithium battery 100 may decrease.

In some embodiments, a thickness of the lithium foil included in the lithium metal layer 116 may be, for example, in a range of about 1 μm to about 50 μm, about 1 μm to about 30 μm, about 10 μm to about 30 μm, or about 10 μm to about 80 μm. If the thickness of the lithium foil is within the ranges above, the lifespan characteristics of the lithium battery 100 may be further improved.

In some embodiments, a particle diameter of the lithium powder included in the lithium metal layer 116 may be, for example, in a range of about 0.1 μm to about 3 μm, about 0.1 μm to about 2 μm, or about 0.1 μm to about 2 μm. If the particle diameter of the lithium powder is within the ranges above, the lifespan characteristics of the lithium battery 100 may be further improved.

[Anode: electrodeposition induction layer]

The anode 110 may further include an electrodeposition induction layer between the anode current collector 112 and the protective layer 114. If the anode 110 includes an electrodeposition induction layer, the lithium metal may be uniformly (e.g., substantially uniformly) electrodeposited between the anode current collector 112 and the protective layer 114 so that generation and/or growth of lithium dendrites may be more effectively suppressed or reduced.

The electrodeposition induction layer may further include, for example, a lithophilic metal. The electrodeposition induction layer may further include, for example, a lithophilic metal and a carbon material.

The lithophilic metal may be a material that may be lithiated and delithiated. The electrodeposition induction layer may be formed by introducing the lithophilic metal onto the anode current collector 112 through casting of nanoparticles. Then, the protective layer 114 may be introduced on the electrodeposition induction layer. For example, if the electrode position induction layer is introduced between the anode current collector 112 and the protective layer 114 through casting of nanoparticles, lithium ions may penetrate the protective layer 114 to form a lithium metal between the protective layer 114 and the electrodeposition induction layer.

The lithophilic metal included in the electrode position induction layer may be nanoparticles of the lithophilic metal. An average particle diameter of the lithophilic metal in the form of nanoparticles may be, for example, in a range of about 10 nm to about 4 μm, about 10 nm to about 1 μm, about 10 nm to about 500 nm, about 10 nm to about 200 nm, or about 20 nm to about 80 nm. If the average particle diameter of the lithophilic metal in the form of nanoparticles is within the ranges above, lithium may be more easily subjected to reversible plating and/or dissolution during charging and discharging. The average particle diameter of the lithophilic metal in the form of nanoparticles may be, for example, a median diameter (D50) measured by using a laser particle size distribution meter.

The lithophilic metal may include, for example, one or more selected from gold (Au), platinum (Pt), palladium (Pd), silicon (Si), silver (Ag), aluminum (Al), bismuth (Bi), tin (Sn), and zinc (Zn). The lithophilic metal may include, for example, Ag.

The carbon material may be used to uniformly (e.g., substantially uniformly) apply the lithophilic metal onto the anode current collector 112. If the carbon material is used to uniformly (e.g., substantially uniformly) apply the lithophilic metal onto the anode current collector 112, the anode current collector 112 may be uniformly (e.g., substantially uniformly) coated with the lithophilic metal. The uniformly applied the lithophilic metal may prevent or reduce formation of lithium dendrites by uniformly (e.g., substantially uniformly) precipitating the lithium metal between the anode current collector 112 and the protective layer 114.

The carbon material may include, for example, amorphous carbon, crystalline carbon, or any combination thereof. The carbon material may include, for example, amorphous carbon.

The amorphous carbon may include carbon black (CB), acetylene black (AB), furnace black (FB), ketjen black (KB), graphene, or a combination thereof. The amorphous carbon may be carbon that has no or very low crystallinity, and in this regard, may be distinguished from crystalline carbon and graphite-based carbon.

The electrodeposition induction layer may include, for example, the lithophilic metal and/or the carbon material, and thus the carbon material may be used to uniformly (e.g., substantially uniformly) apply the lithophilic metal onto the anode current collector 112, and the lithophilic metal may be then used to uniformly (e.g., substantially uniformly) precipitate the lithium metal between the electrodeposition induction layer and the protective layer 114. In this regard, the formation of lithium dendrites may be suppressed or reduced, thereby improving the lifespan characteristics of the lithium battery 100 including the anode 110.

The mixing ratio, e.g., the weight ratio, of the lithophilic metal to the carbon material included in the electrodeposition induction layer may be, for example, about 10:1 to about 1:10, about 10:1 to about 1:1, about 10:1 to about 2:1, about 5:1 to about 1:1, or about 5:1 to about 2:1.

The electrodeposition induction layer may further include a binder. The binder included in the electrodeposition induction layer may include, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, and/or the like, but is not necessarily limited thereto. Any suitable material available as a binder in the art may be used as the binder. The binder may be used alone or in a combination of a plurality of different binders. If the electrode position induction layer does not include the binder, the electrodeposition induction layer may be easily separated from the protective layer 114 or the anode current collector 112. The amount of the binder included in the electrodeposition induction layer may be, for example, 5 wt% or less, about 0.1 wt% to about 5 wt%, about 0.1 wt% to about 3 wt%, or about 0.1 wt% to about 1 wt%, based on the total weight of the electrodeposition induction layer.

The thickness of the electrode position induction layer may be, for example, in a range of about 0.1 $\mu$m to about 5 $\mu$m, about 0.1 $\mu$m to about 3 $\mu$m, about 0.5 $\mu$m to about 5 $\mu$m, about 0.5 $\mu$m to 3 $\mu$m, or about 0.5 $\mu$m to about 2 $\mu$m.

[Cathode]

Referring to FIGS. 1-2, the lithium battery 100 may include a cathode current collector 140 and a cathode active material layer 130 on the cathode current collector 140. The cathode active material layer 130 may be between the electrolyte 120 and the cathode current collector 140.

[Cathode: cathode current collector]

Referring to FIGS. 1-2, the cathode 150 may include the cathode current collector 140. For example, the cathode 150 may be prepared by providing the cathode active material layer 130 on the cathode current collector 140.

For example, the cathode current collector 140 may include In, Cu, Mg, stainless steel, Ti, Fe, Co, Ni, Zn, Al, Ge, Li, and/or an alloy thereof.

In some embodiments, the cathode current collector 140 may include Al.

For example, in the same manner as in the anode current collector 110, the cathode current collector 140 may include a base film and a metal substrate layer on one side or two opposing sides of the base film.

[Cathode: Cathode active material]

The cathode active material layer 130 may include a cathode active material, a conductive material, and a binder.

For example, at least one composite oxide including lithium and a metal selected from Co, Mn, Ni, and a combination thereof may be used, and examples thereof may include a compound represented by one selected from the following formulae: $Li_aA_{1-b}B^1{}_bD^1{}_2$ (where $0.90 \le a \le 1.8$ and $0 \le b \le 0.5$); $Li_aE_{1-b}B^1{}_bO_{2-c}D_{1c}$ (where $0.90 \le a \le 1.8$, $0 \le b \le 0.5$, and $0 \le c \le 0.05$); $LiE_{2-b}B^1{}_bO_{4-c}D^1{}_c$ (where $0 \le b \le 0.5$ and $0 \le c \le 0.05$); $Li_aNi_{1-b-c}Co_bB^1{}_cD^1{}_\alpha$ (where $0.90 \le a \le 1.8$, $0 \le b \le 0.5$,

$0 \le c \le 0.05$, and $0 < \alpha \le 2$); $Li_aNi_{1-b-c}Co_bB^1_cO_{2-\alpha}F^1_\alpha$ (where $0.90 \le a \le 1.8$, $0 \le b \le 0.5$, $0 \le c \le 0.05$, and $0 < \alpha \le 2$); $Li_aNi_{1-b-c}Co_bB^1_cO_{2-\alpha}F^1_2$ (where $0.90 \le a \le 1.8$, $0 \le b \le 0.5$, $0 \le c \le 0.05$, and $0 < \alpha < 2$); $Li_aNi_{1-b-c}Mn_bB^1_cD_\alpha$ (where $0.90 \le a \le 1.8$, $0 \le b \le 0.5$, $0 \le c \le 0.05$, and $0 < \alpha \le 2$); $Li_aNi_{1-b-c}Mn_bB^1_cO_{2-\alpha}F^1_\alpha$ (where $0.90 \le a \le 1.8$, $0 \le b \le 0.5$, $0 \le c \le 0.05$, and $0 < \alpha < 2$); $Li_aNi_{1-b-c}Mn_bB^1_cO_{2-\alpha}F^1_2$ (where $0.90 \le a \le 1.8$, $0 \le b \le 0.5$, $0 \le c \le 0.05$, and $0 < \alpha < 2$); $Li_aNi_bE_cG_dO_2$ (where $0.90 \le a \le 1.8$, $0 \le b \le 0.9$, $0 \le c \le 0.5$, and $0.001 \le d \le 0.1$); $Li_aNi_bCo_cMn_dG_eO_2$ (where $0.90 \le a \le 1.8$, $0 \le b \le 0.9$, $0 \le c \le 0.5$, $0 \le d \le 0.5$, and $0.001 \le e \le 0.1$); $Li_aNiG_bO_2$ (where $0.90 \le a \le 1.8$ and $0.001 \le b \le 0.1$); $Li_aCoG_bO_2$ (where $0.90 \le a \le 1.8$ and $0.001 \le b \le 0.1$); $Li_aMnG_bO_2$ (where $0.90 \le a \le 1.8$ and $0.001 \le b \le 0.1$); $Li_aMn_2G_bO_4$ (where $0.90 \le a \le 1.8$ and $0.001 \le b \le 0.1$); $QO_2$; $QS_2$; $LiQS_2$; $V_2O_5$;

$LiV_2O_5$; $LiIO_2$; $LiNiVO_4$; $Li_{(3-f)}J_2(PO_4)_3$ (where $0 \le f \le 2$); $Li_{(3-f)}Fe_2(PO_4)_3$ (where $0 \le f \le 2$); and $LiFePO_4$.

In the formulae above, A may be Ni, Co, Mn, or a combination thereof; $B^1$ may be Al, Ni, Co, Mn, Cr, Fe, Mg, Sr, V, Ga, Si, W, Mo, Cu, Zn, Ti, boron (B), a rare earth element, or a combination thereof; $D^1$ may be O, F, S, P, or a combination thereof;

E may be Co, Mn, or a combination thereof; $F^1$ may be F, S, P, Cl, Br, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

For example, the cathode active material may include a lithium transition metal oxide including nickel and other transition metals. In the lithium transition metal oxide including nickel and other transition metals, an amount of nickel may be, based on the total number of moles of the transition metal, 60 mol% or more, for example, 75 mol% or more, 80 mol% or more, 85 mol% or more, or 90 mol% or more.

For example, the lithium transition metal oxide may be a compound represented by Formula 18:

Formula 18 $$Li_aNi_xCo_yM_zO_{2-b}A_b$$

wherein, in Formula 18, $1.0 \le a \le 1.2$, $0 \le b \le 0.2$, $0.6 \le x < 1$, $0 < y \le 0.3$, $0 < z \le 0.3$, $x+y+z=1$, M may be at least one selected from Mn, V, Mg, Ga, Si, W, Mo, Fe, Cr, Cu, Zn, Ti, Al, and B, and
A may be F, S, Cl, Br, or a combination thereof.

In Formula 18, x, y, and z may satisfy: $0.7 \le x < 1$, $0 < y \le 0.3$, and $0 < z \le 0.3$; $0.8 \le x < 1$, $0 < y \le 0.3$, and $0 < z \le 0.3$; $0.8 \le x < 1$, $0 < y \le 0.2$, and $0 < z \le 0.2$; $0.83 \le x < 0.97$, $0 < y \le 0.15$, and $0 < z \le 0.15$; or $0.85 \le x < 0.95$, $0 < y \le 0.1$, and $0 < z \le 0.1$.

For example, the lithium transition metal oxide may be at least one selected from compounds represented by Formulae 18-1 and 18-2:

Formula 18-1 $$LiNi_xCo_yMn_zO_2$$

wherein, in Formula 18-1, $0.6 \le x \le 0.95$, $0 < y \le 0.2$, and $0 < z \le 0.1$, and for example, $0.7 \le x \le 0.95$, $0 < y \le 0.3$, and $0 < z \le 0.3$, and

Formula 18-2 $$LiNi_xCo_yAl_zO_2$$

wherein, in Formula 18-2, $0.6 \le x \le 0.95$, $0 < y \le 0.2$, and $0 < z \le 0.1$, and for example, $0.7 \le x \le 0.95$, $0 < y \le 0.3$, and $0 < z \le 0.3$; $0.8 \le x \le 0.95$, $0 < y \le 0.3$, and $0 < z \le 0.3$; $0.82 \le x \le 0.95$, $0 < y \le 0.15$, and $0 < z \le 0.15$; or $0.85 \le x \le 0.95$, $0 < y \le 0.1$, and $0 < z \le 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, or $LiNi_{0.88}Co_{0.1}Al_{0.02}O_2$.

For example, the cathode active material may include a coating layer on a surface of the lithium transition metal oxide, or a mixture of the lithium transition metal oxide and a lithium transition metal oxide including a coating layer.

For example, the coating layer may include a coating element compound of an oxide of a coating element, a hydroxide of the coating element, an oxyhydroxide of the coating element, an oxycarbonate of the coating element, or a hydroxycarbonate of the coating element.

For example, the compound constituting the coating layer may be amorphous and/or crystalline. The coating element included in the coating layer may be Mg, Al, Co, K, Na, Ca, Si, Ti, V, Sn, Ge, Ga, B, As, Zr, or a mixture thereof. In the formation of the coating layer, any suitable coating method may be used as long as the lithium transition metal oxide may be applied in a method (e.g., spray coating, dipping method, etc.) that does not (or substantially does not) adversely affect the physical properties of the cathode active material by using the aforementioned elements. Such a coating method may be well understood by those skilled in the art upon reviewing this disclosure, and thus, a further detailed description thereof is not necessary here.

Examples of the conductive material are carbon black, graphite fine particles, and the like, but are not limited thereto. Any suitable material available as a conductive material (e.g., an electrically conductive material) in the art may be

used.

Examples of the binder are a vinylidene fluoride/hexafluoropropylene copolymer, polyvinylidene fluoride (PVDF), polyacrylonitrile, polymethyl methacrylate, polytetrafluoroethylene, a mixture thereof, and/or a styrene butadiene-rubber polymer, and the like, but are not limited thereto. Any suitable material available as the binder in the art may be used.

A plasticizer and/or a pore-providing agent may be added to the cathode active material composition to form pores in an electrode plate.

The amounts of the cathode active material, the conductive material, the binder, and the solvent used in the cathode may be at any suitable levels generally used in a lithium battery. Depending on the use and configuration of a lithium battery, one or more of the conductive material, the binder, and the solvent may be omitted.

The content of the binder included in the cathode may be in a range of about 0.1 wt% to about 10 wt% or about 0.1 wt% to about 5 wt%, based on the total weight of the cathode active material layer. The content of the composite cathode active material included in the cathode may be in a range of about 80 wt% to about 99 wt%, about 90 wt% to about 99 wt%, or about 95 wt% to about 99 wt%, based on the total weight of the cathode active material layer.

(Separator)

A separator to be provided between the cathode and the anode may be prepared.

The separator may be any suitable separator generally used in a lithium battery. The separator may have, for example, low resistance to migration of ions in an electrolyte and have electrolyte solution-retaining ability. The separator may be, for example, glass fiber, polyester, teflon, PE, PP, PTFE, and a combination thereof, each of which may be in a non-woven fabric form or a woven fabric form. For a lithium-ion battery, a rollable separator including, for example, PE and/or PP may be used. A separator having a good organic electrolyte solution-retaining ability may be used for a lithium-ion polymer battery.

The separator may be, for example, prepared according to the following example method, but embodiments are not limited thereto, and the method may be controlled according to desired or required conditions.

A separator composition may be prepared by mixing together a polymer resin, a filler, and a solvent. Then, the separator composition may be directly coated and dried on the electrode to form a separator. In some embodiments, a separator film obtained by casting the separator composition on a support, drying, and separating it from the support may be laminated on an electrode to form a separator.

The polymer used in the separator preparation is not limited, and any suitable polymer available as a binder for an electrode plate may be used. For example, a vinylidene fluoride/hexafluoropropylene copolymer, polyvinylidene fluoride (PVDF), polyacrylonitrile, polymethyl methacrylate, or a mixture thereof may be used.

(Lithium battery)

Referring to FIG. 3, a lithium battery 1 according to embodiments may include a cathode 3, an anode 2, and a separator 4. The cathode 3, the anode, and the separator 4 may be wound and/or folded to form a battery structure. The formed battery structure may be accommodated in a battery case 5. Then, the battery case 5 may be filled with an organic electrolyte solution, and sealed with a cap assembly 6, thereby completing the manufacture of the lithium battery 1. The battery case 5 may be a cylindrical-type, but the shape of the battery case 5 is not limited thereto. For example, the battery case 5 may be a square-type, a thin-film type, or the like.

Referring to FIG. 4, the lithium battery 1 according to embodiments may include the cathode 3, the anode 2, and the separator 4. The separator 4 may be between the cathode 3 and the anode 2, and the cathode 3, the anode 2, and the separator 4 may be wound and/or folded to form a battery structure 7. The formed battery structure 7 may be accommodated in a battery case 5. The lithium battery 1 may include electrode tabs 8 serving as an electrical path for conducting a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not limited thereto. For example, the battery case 5 may be a cylindrical-type, a thin-film type, or the like.

Referring to FIG. 5, the lithium battery 1 according to embodiments may include the cathode 3, the anode 2, and the separator 4. The separator 4 may be between the cathode 3 and the anode 2 to form the battery structure 7. The battery structure 7 may be laminated in a bi-cell structure, and then accommodated in the battery case 5. The lithium battery 1 may include electrode tabs 8 serving as an electrical path for conducting a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not limited thereto. For example, the battery case 5 may be a cylindrical-type, a thin-film type, or the like.

A pouch-type lithium battery each corresponds to use of a pouch as a battery case for lithium batteries of FIGS.

3-5. The pouch-type lithium battery may include at least one battery assembly. The separator 4 may be between the cathode 3 and the anode 2 to form a battery assembly. The battery assembly may be laminated as a bi-cell structure, impregnated with an organic electrolyte solution, and accommodated and sealed in a pouch to complete the manufacture of a pouch-type lithium battery. For example, in some embodiments, the above-described cathode, anode, and separator may be simply stacked and accommodated in a pouch in the form of an electrode assembly, or may be wound and/or folded into an electrode assembly in the form of a jelly roll to be then accommodated in a pouch. Then, an organic electrolyte solution may be injected into the pouch and sealed to complete the manufacture of a lithium battery.

Because the lithium battery has excellent lifespan characteristics and excellent high-rate characteristics, the lithium battery may be used in, for example, an electric vehicle (EV). For example, the lithium metal battery may be used in a hybrid vehicle, such as a plug-in hybrid electric vehicle (PHEV) and/or the like. The lithium metal battery may also be applicable to any suitable fields utilizing high-power storage. For example, the lithium metal battery may be used in an electric bicycle, a power tool, and/or the like.

A plurality of the lithium batteries may be stacked to form a battery module, and a plurality of the battery modules may form a battery pack. The battery pack may be used in a device that utilizes high capacity and large output. For example, the battery pack may be used in a laptop computer, a smart phone, an electronic vehicle, and/or the like. The battery module may include, for example, multiple batteries and a frame that holds the multiple batteries. The battery pack may include, for example, multiple battery modules and a bus bar that connects the battery modules together. The battery module and/or the battery pact may further include a cooling device. The multiple battery packs may be managed by a battery management system. The battery management system may include a battery pack and an electronic control device connected to the battery pack.

For example, the lithium battery may be a lithium primary battery, a lithium secondary battery, a lithium-sulfur battery, a lithium-air battery, etc., but is not limited thereto. Any suitable lithium battery available in the art may be used.

The lithium battery may be, for example, prepared according to the following method, but the preparation method thereof is not necessarily limited to the example method and may be adjusted to desired or required conditions.

Hereinafter, embodiments of the present disclosure will be described in more detail through Examples and Comparative Examples below. However, these examples are embodiments of the present disclosure, and the scope of the present disclosure is not limited thereto.

(Preparation of cross-linked polymer)

Preparation Example 1: PI-F

After filling a three-neck round bottom flask with nitrogen, 9.9790 g (0.0498 mol) of 2,2'-bis(trifluoromethyl) benzidine (TFMB) and 2.5275 g (0.0166 mol) of 1,3-diaminobenzoic acid (DABA) were added thereto, and 153 g of N-methylpyrrolidone (NMP) was added and completely dissolved by using a mechanical stirrer. Next, 14.4935 g (0.0664 mol) of 4,4'-(hexafluoroisopropylidene)diphthalic anhydride (6FDA) was added and stirred at room temperature for 24 hours to prepare fluorine-substituted polyamic acid (6FDA/TFMB/DABA, acid equivalent weight=210 g/eq, and weight average molecular weight (Mw)= about 1,000,000) represented by Formula 17. The fluorine-substituted polyamic acid was a random copolymer. The molar ratio of 6FDA:TFMB:DABA was 4:3:1. In Formula 17, the molar ratio of m:n was 1:3.

Formula 19

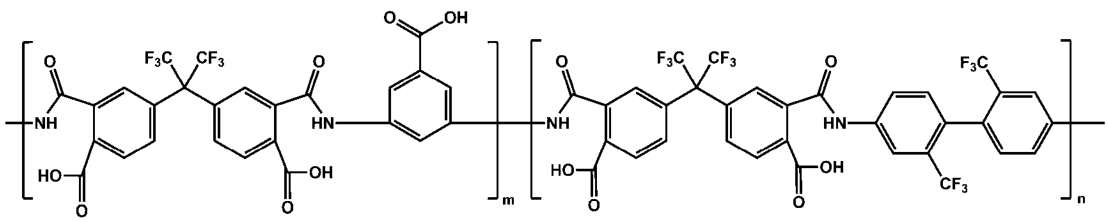

Comparative Preparation Example 1: PVA

The same polyvinyl alcohol used in Example 1 was used.

Comparative Preparation Example 2: PVDF

Poly(vinylidene fluoride) was prepared.

Comparative Preparation Example 3: SBR/CMC

A mixture of styrene butadiene rubber (SBR) and carboxymethyl cellulose (CMC) mixed together at a weight ratio of 1:1 was prepared.

(Preparation of lithium battery)

Example 1: Cu substrate/ PI-F:PVA=20:80 protective layer (1 μm)/ SN-containing electrolyte without FEC

(Preparation of anode)

The fluorine-substituted polyamic acid represented by Formula 17 prepared in Preparation Example 1 was added to N,N-dimethylacetamide (DMAc, 99%, Sigma-Aldrich) and then stirred overnight at 60 °C to prepare a first composition.

Polyvinyl alcohol (weight average molecular weight Mw=78,000, saponification degree 88%, Polysciences, 15132) was added to DMAc (99%, Sigma-Aldrich) and then stirred overnight at 60 °C to prepare a second composition.

The first composition and the second composition were mixed together so that the fluorine-substituted polyamic acid and the PVA had a weight ratio of 20:80, to prepare a third composition.

The third composition was subjected to a crosslinking reaction by heat treatment at 180 °C for 2 hours in a vacuum oven to prepare a cross-linked polymer. In more detail, a cross-linked polymer of the fluorine-substituted polymide acid and the polyvinyl alcohol was formed via ester linkers by a reaction between a carboxyl group included in the fluorine-substituted polyamic acid and a hydroxy group of the polyvinyl alcohol. The cross-linked polymer had a three-dimensional network structure in which the polyimide and the polyvinyl alcohol were cross-linked at multiple points.

The third composition was applied onto a 20 μm-thick copper (Cu) current collector by using a doctor blade, and then the solvent was removed therefrom at 140 °C for 6 hours, thereby providing a protective layer.

As a result, an anode having an anode current collector/protective layer structure was prepared. A thickness of the protective layer was 1 μm.

(Preparation of coin cell)

A 20 μm-thick lithium foil was used as a counter electrode, a polypropylene separator (Celgard 3510) was provided between the counter electrode and the anode, and then an electrolyte solution was injected thereon, to prepare a coin cell.

As the electrolyte solution, a solution in which 0.2 wt% succinonitrile was dissolved in LiDFOB:$LiBF_4$ 0.6/0.6M in DMC/DEC (1/2 v/v) solution was used.

Example 2: Cu substrate/ PI-F:PVA=20:80+LiTFSi protective layer (1 μm)/ SN-containing electrolyte without FEC

A coin cell was prepared in the same manner as in Example 1, except that 5 g of lithium bis(trifluoromethanesulfonyl)imide (LiTFSi) was added to 10 g of the third composition so that the LiTFSi was included as lithium salt in the protective layer.

Example 3: Cu substrate/ PI-F:PVA=20:80 protective layer (1 μm)/ SN-containing electrolyte with FEC

A coin cell was prepared in the same manner as in Example 1, except that the DMC of the electrolyte solution was replaced with FEC solvent.

Example 4: Cu substrate/ PI-F:PVA=20:80 protective layer (1.5 μm)/ SN-containing electrolyte without FEC

A coin cell was prepared in the same manner as in Example 1, except that a thickness of the protective layer was changed to 1.5 μm.

Example 5: Cu substrate/ PI-F:PVA=20:80 protective layer (2.1 μm)/ SN-containing electrolyte without FEC

A coin cell was prepared in the same manner as in Example 1, except that a thickness of the protective layer was changed to 2.1 μm.

Comparative Example 1: Cu substrate/ PVA protective layer (1 μm)/ SN-containing electrolyte without FEC

A coin cell was prepared in the same manner as in Example 1, except that the polyvinyl alcohol prepared in Comparative Preparation Example 1 was used instead of the fluorine-substituted polyamic acid represented by Formula 17 prepared in Preparation Example 1.

Comparative Example 2: Cu substrate/ PVDF protective layer (1 μm)/ SN-containing electrolyte without FEC

A coin cell was prepared in the same manner as in Example 1, except that the PVDF prepared in Comparative Preparation Example 2 was used instead of the fluorine-substituted polyamic acid represented by Formula 17 prepared in Preparation Example 1.

Comparative Example 3: Cu substrate/ SBR-CMC protective layer (1 μm)/ SN-containing electrolyte without FEC

A coin cell was prepared in the same manner as in Example 1, except that the SBR-CMC prepared in Comparative Preparation Example 3 was used instead of the fluorine-substituted polyamic acid represented by Formula 17 prepared in Preparation Example 1.

Comparative Example 4: Cu substrate/ protective layer fee/ SN-containing electrolyte without FEC

A coin cell was prepared in the same manner as in Example 1, except that the anode did not include the protective layer.

Evaluation Example 1: Evaluation of physical properties of protective layer

A polymer film having a size of 5 $cm^2$×5 $cm^2$ and a thickness of 50 μm was prepared on a glass substrate by using the protective layers of Examples 1 to 2, 4, and 5 and Comparative Examples 1 to 3, and mechanical properties of the polymer were evaluated as follows.

The extension, recovery, modulus, and hardness of the protective layers of Examples 1, 2, 4, and 5 and Comparative Examples 1 to 3 were measured by using a microindenter (DUH-211, Shimadzu). The force applied to samples of the polymer film was 10 mN.

Results of the measurement are shown in Table 1. The extension may be a distance the tip of the microindenter traveled inside the protective layer until a certain force was applied to the tip. The recovery may be a ratio of the distance the tip travels back toward the surface of the protective layer from the point at which the tip travels the farthest inside the protective layer to the point at which the force applied to the tip becomes zero to the distance traveled by the tip inside the protective layer. The modulus may be the indentation modulus, and the hardness may be the indentation hardness, and may each be calculated from the force applied to the tip of the protective layer according to the traveling distance of the microindenter tip.

Table 1

| | Extension [mm] | Recovery [%] | Modulus [Gpa] | Hardness [N/mm2] |
|---|---|---|---|---|
| Example 1 | 0.39 | 68.6 | 38.1 | 1578 |
| Example 2 | 0.38 | 71.0 | 40.3 | 1771 |
| Example 4 | 0.37 | 70.1 | 41.2 | 1784 |
| Example 5 | 0.38 | 70.7 | 42.5 | 1806 |
| Comparative Example 1 | 0.33 | 66.5 | 29.5 | 1695 |
| Comparative Example 2 | 0.87 | 61.7 | 6.3 | 336 |
| Comparative Example 3 | 1.23 | 53.9 | 4.2 | 169 |

As shown in Table 1, the protective layers of Examples 1, 2, 4, and 5 had increased modulus, e.g., elastic modulus, compared to the protective layers of Comparative Examples 1 to 3, and thus expansion of the anode was suppressed.

Evaluation Example 2: Measurement of ion conductivity of protective layer at room temperature (25 °C) and high temperature (45 °C)

A symmetry cell was prepared by providing a 50 um-thick indium (In) electrode on both sides of each of the protective layers of Examples 1, 2, 4, and 5 and Comparative Examples 1 to 3. The preparation of the symmetry cell was carried out in a glove box in an Ar atmosphere.

For a pellet specimen in which the In electrodes were on two opposing sides, impedance of the pellet was measured according to a 2-probe method by using an impedance analyzer (Material Mates 7260 impedance analyzer). The frequency range was about 0.1 Hz to about 1 MHz, and the amplitude voltage was 10 mV. In an Ar atmosphere, the impedance was measured at room temperature (25 °C) and high temperature (45 °C). Resistance values were obtained from the arc of the Nyquist plot for the impedance measurement results, and the ion conductivity was calculated in consideration of the area and thickness of the electrodes of the pellet specimen.

Results of the ionic conductivity measurement are shown in Table 2.

Evaluation Example 3: Evaluation of swelling ratio of protective layer

The protective layers of Examples 1, 2, 4, and 5 and Comparative Examples 1 and 2 were impregnated into liquid electrolyte (LE) for 24 hours. The swelling ratio of the protective layers was calculated according to the following equation:

Swelling ratio (%) = ((mass of protective layer after impregnation) - (mass of protective layer before impregnation) *100/mass of protective layer after impregnation

Results of the measurements are shown in Table 2.

Table 2

| | Ion conductivity at room temperature (mS/cm) | Ion conductivity at high temperature Ion conductivity at | Swelling ratio (%) |
|---|---|---|---|
| Example 1 | 0.18 | 0.25 | 0 |
| Example 2 | 0.76 | 0.9 | 2.2 |
| Example 4 | 0.75 | 0.83 | 2.3 |
| Example 5 | 0.78 | 0.87 | 1.9 |
| Comparative Example 1 | 0.07 | 0.08 | 19.4 |
| Comparative Example 2 | 0.05 | 0.05 | 11.8 |
| Comparative Example 3 | 0.04 | 0.04 | 52.6 |

As shown in Table 2, the protective layers of Examples 1, 2, 4, and 5 had excellent ion conductivity and reduced swelling ratio compared to the protective layers of Comparative Examples 1 and 2.

Evaluation Example 4: Evaluation of charge and discharge characteristics

The lithium batteries (coin cells) of Examples 1 to 5 and Comparative Examples 1 to 4 were charged at a constant current with a current of 0.1 C rate at 25 °C until the voltage reached 0.01 V (vs. Li), and then charged at a constant voltage until the current reached 0.01 C while maintaining the voltage at 0.01 V. The fully charged lithium batteries were left to rest for 10 minutes, and then discharged at a constant current of 0.1 C until the voltage reached 1.5 V (vs. Li) ($1^{st}$ cycle).

Next, the lithium batteries were charged at a constant current with a current of 0.2 C rate until the voltage reached 0.01 V (vs. Li), and then charged at a constant voltage until the current reached 0.01 C while maintaining the voltage at 0.01 V. The fully charged coin cells were left to rest for 10 minutes, and then discharged at a constant current of 0.2 C until the voltage reached 1.5 V (vs. Li) ($1^{st}$-$2^{nd}$ cycle is referred to as a formation stage).

The coin cells that had undergone the formation stage were charged at a constant current with a current of 1.0 C rate at 25 °C until the voltage reached 0.01 V (vs. Li), and then charged at a constant voltage until the current reached 0.01 C while maintaining the voltage at 0.01 V. After the fully charged coin cells were left to rest for 10 minutes, a discharge cycle of discharging at a constant current of 1.0 C until the voltage reached 1.5 V (vs. Li) was repeated 50 times. Some of the results of the charge/discharge test are shown in Table 3.

The capacity retention was calculated according to Equation 1: In the term 'expansion in electrode thickness', the 'electrode' was an anode.

Equation 1 [348] Capacity retention (%)=(discharge capacity in $53^{rd}$ cycle/discharge capacity in $3^{rd}$ cycle)$\times$100% Equation 1

Table 3

| | Protective layer | | Electrolyte | | Capacity retention [%] |
|---|---|---|---|---|---|
| | Type | Thickness ($\mu$m) | SN | FEC | |
| Example 1 | PI-F:PVA | 1 | Presence | Absent | 89.1 |
| Example 2 | PI-F:PVA+LiTFSi | 0.5 | Present | Absent | 93.2 |
| Example 3 | PI-F:PVA | 1 | Present | Present | 94.3 |
| Example 4 | PI-F:PVA | 1.5 | Present | Absent | 87.9 |
| Example 5 | PI-F:PVA | 2.1 | Present | Absent | 86.7 |
| Comparative Example 1 | PVA | 1 | Present | Absent | 71.3 |
| Comparative Example 2 | PVDF | 1 | Present | Absent | 55.5 |
| Comparative Example 3 | SBR/CMC | 1 | Present | Absent | 37.1 |
| Comparative Example 4 | No protective layer | - | Present | Absent | 83.5 |

As shown in Table 3, the lithium batteries of Examples 1 to 5 still had improved battery efficiency and capacity retention even after performing charging and discharging several times, compared to the lithium batteries of Comparative Examples 1 to 4, because succinonitrile remained in the electrolyte rather than being decomposed in the electrolyte. Also, by including the protective layer having the modulus above a certain level, the expansion in electrode thickness decreased.

**Claims**

**1.** A lithium battery comprising:

an anode; a cathode; and an electrolyte between the anode and the cathode,
wherein the anode comprises an anode current collector and a protective layer between the anode current collector and the electrolyte,
the electrolyte comprises a nitrile-based additive comprising two or more nitrile groups, and
the protective layer has a modulus of 30 Gpa or more.

**2.** The lithium battery as claimed in claim 1, wherein the nitrile-based additive is represented by Formula 1:

Formula 1

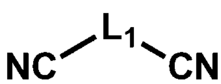

wherein, in Formula 1,
$L_1$ is a C1-C10 alkylene group.

**3.** The lithium battery as claimed in claim 1, wherein the nitrile-based additive comprises succinonitrile, acetonitrile, and/or butyronitrile.

**4.** The lithium battery as claimed in claim 1, wherein an amount of the nitrile-based additive is in a range of about 0.1 wt% to about 5 wt% based on a total weight of the electrolyte.

5. The lithium battery as claimed in claim 1, wherein the electrolyte further comprises an organic solvent.

6. The lithium battery as claimed in claim 5, wherein the organic solvent comprises propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

7. The lithium battery as claimed in claim 6, wherein the organic solvent is free of fluoroethylene carbonate (FEC).

8. The lithium battery as claimed in claim 1, wherein:

the electrolyte further comprises a lithium salt, and
the lithium salt comprises $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where $1 \leq x \leq 20$ and $1 \leq y \leq 20$), LiCl, LiI, or a mixture thereof.

9. The lithium battery as claimed in claim 1, wherein the electrolyte is in liquid form or gel form.

10. The lithium battery as claimed in claim 1, wherein a thickness of the protective layer is 2 μm or less.

11. The lithium battery as claimed in claim 1, wherein a swelling ratio of the protective layer is less than 10%.

12. The lithium battery as claimed in claim 1, wherein:

an ion conductivity of the protective layer at room temperature (25 °C) is 0.1 mS/cm or more, and
an ion conductivity of the protective layer at a high temperature (45 °C) is 0.2 mS/cm or more.

13. The lithium battery as claimed in claim 1, wherein:
the protective layer comprises a polymer binder.

14. The lithium battery as claimed in claim 13, wherein:

the polymer binder comprises: a first polymer, which is at least one selected from fluorine-substituted polyamic acid and fluorine-substituted polyimide and comprises a first functional group; and a third polymer, which is a product of a crosslinking reaction of a water-soluble second polymer and comprises a second functional group, and
the first polymer and the water-soluble second polymer are cross-linked by an ester bond formed by a reaction between the first functional group and the second functional group.

15. The lithium battery as claimed in claim 14, wherein the first functional group and the second functional group are each independently one selected from a carboxyl group, an amide group, an aldehyde group, and a hydroxy group.

16. The lithium battery as claimed in claim 14, wherein the first polymer comprises an alkali metal.

17. The lithium battery as claimed in claim 14, wherein the water-soluble second polymer comprises polyvinyl alcohol.

18. The lithium battery as claimed in claim 14, wherein a weight ratio of the first polymer to the water-soluble second polymer is in a range of about 1:99 to about 50:50.

19. The lithium battery as claimed in claim 1, wherein the protective layer comprises a lithium salt.

20. The lithium battery as claimed in claim 1, wherein:

the anode current collector comprises a base film and a metal layer on one side or both sides of the base film,
the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe),

cobalt (Co), nickel (Ni), zinc (Zn), aluminum (Al), germanium (Ge), lithium (Li), or an alloy thereof.

FIG. 1

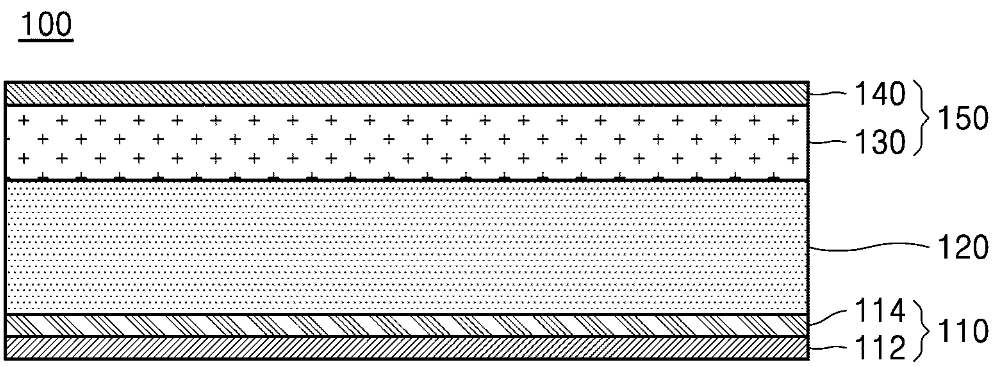

FIG. 2

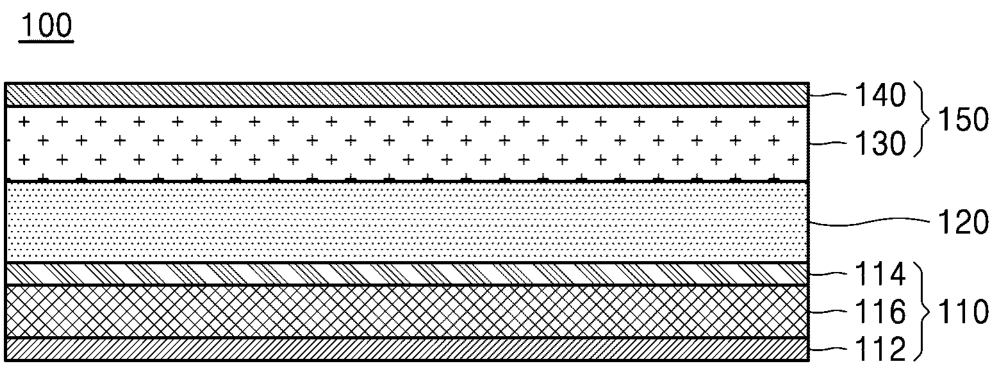

FIG. 3

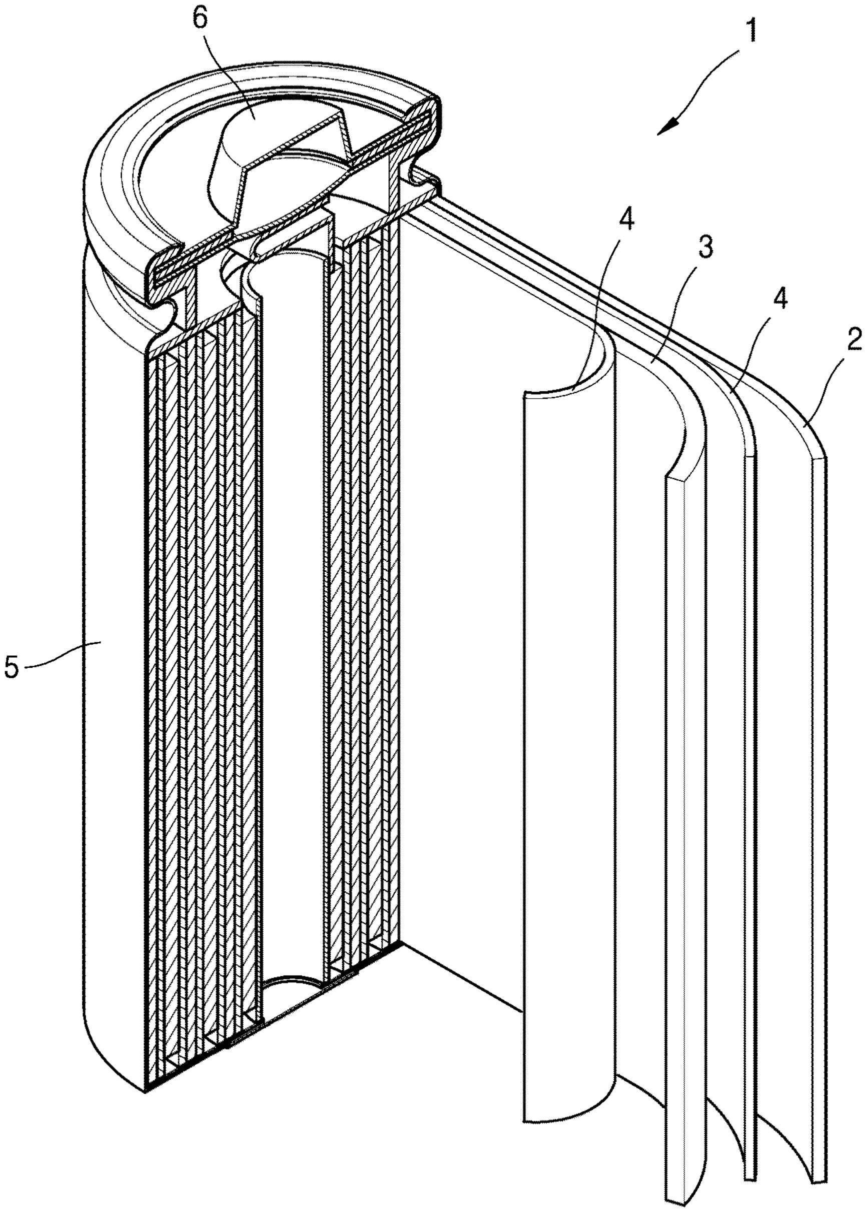

FIG. 4

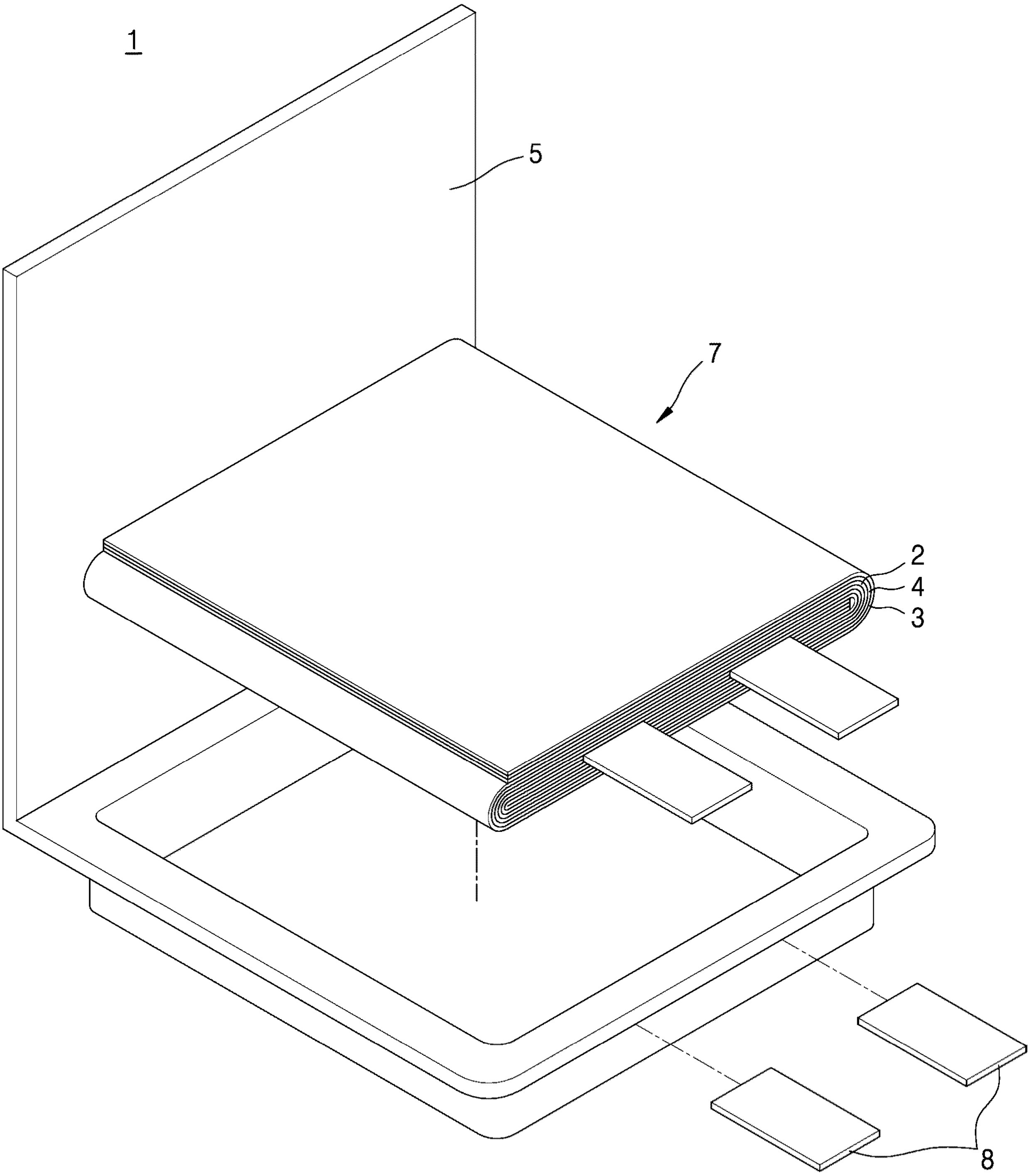

FIG. 5

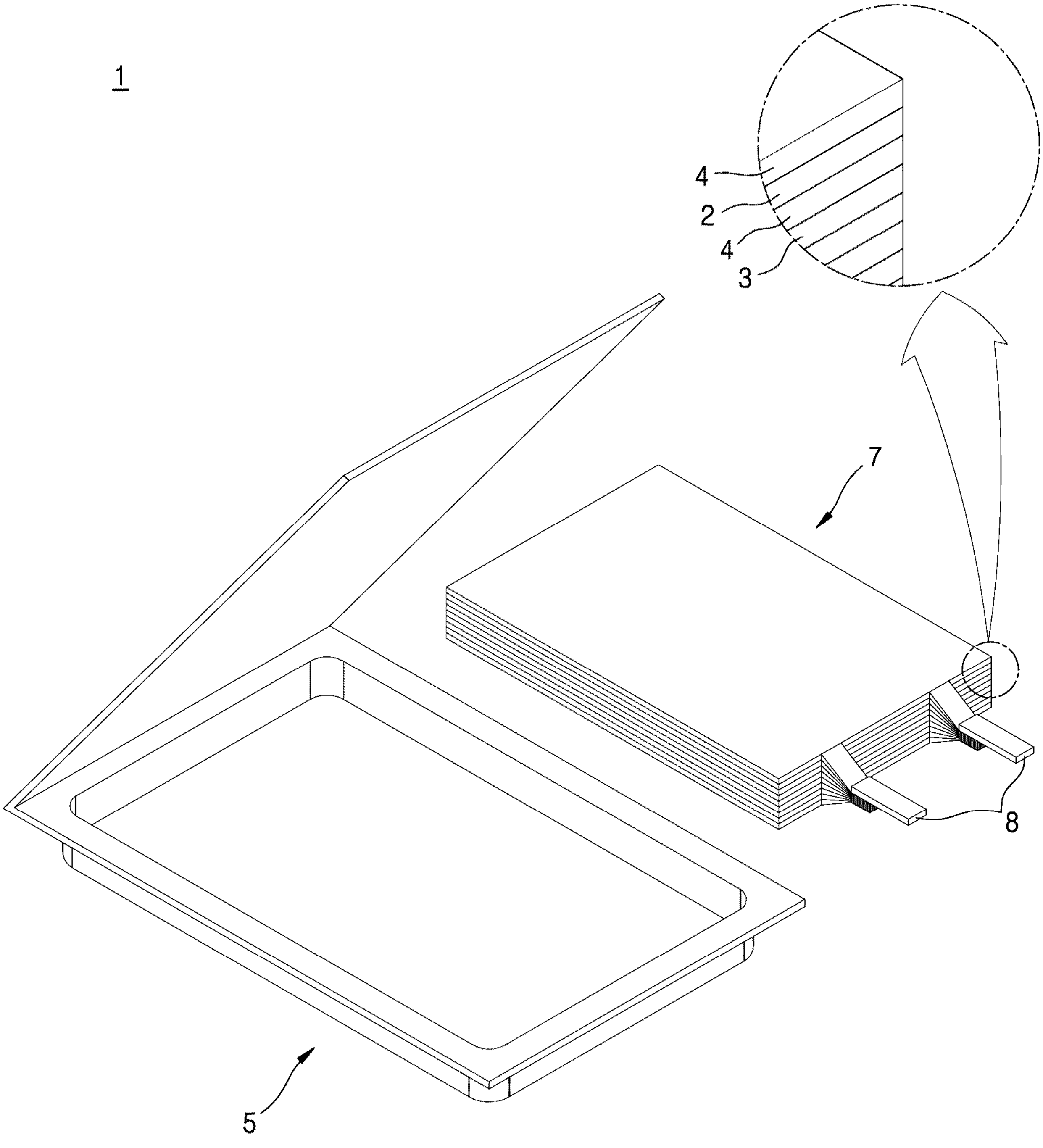

## INTERNATIONAL SEARCH REPORT

International application No.
**PCT/KR2024/003734**

### A. CLASSIFICATION OF SUBJECT MATTER

**H01M 4/62**(2006.01)i; **H01M 10/0567**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/62(2006.01); H01M 10/052(2010.01); H01M 10/0525(2010.01); H01M 10/0567(2010.01); H01M 4/134(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬전지(lithium battery), 음극(anode), 보호층(protective layer), 전해질(electrolyte), 니트릴계 첨가제(nitrile-based additive), 모듈러스(modulus)

### C. DOCUMENTS CONSIDERED TO BE RELEVANT

| Category* | Citation of document, with indication, where appropriate, of the relevant passages | Relevant to claim No. |
|---|---|---|
| Y | KR 10-2017-0001069 A (SAMSUNG ELECTRONICS CO., LTD.) 04 January 2017 (2017-01-04) See claims 1, 14, 16-17, 20, 24, 26, 28 and 32; and paragraphs [0026]-[0027], [0041], [0109]-[0113], [0129], [0168]-[0170] and [0199]. | 1-20 |
| Y | KR 10-2020-0016620 A (SAMSUNG SDI CO., LTD.) 17 February 2020 (2020-02-17) See claims 1 and 9-11. | 1-20 |
| Y | KR 10-2019-0035387 A (SAMSUNG ELECTRONICS CO., LTD. et al.) 03 April 2019 (2019-04-03) See claims 1-4 and 15-17; and paragraphs [0047], [0116] and [0120]-[0129]. | 1-20 |
| A | KR 10-2010-0120238 A (PANASONIC CORPORATION) 12 November 2010 (2010-11-12) See entire document. | 1-20 |
| A | KR 10-2022-0058016 A (LG ENERGY SOLUTION, LTD.) 09 May 2022 (2022-05-09) See entire document. | 1-20 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 June 2024** | **26 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/003734**

| Patent document cited in search report | Publication date (day/month/year) | Patent family member(s) | Publication date (day/month/year) |
|---|---|---|---|
| KR 10-2017-0001069 A | 04 January 2017 | CN 106299244 A | 04 January 2017 |
| | | CN 106299244 B | 04 January 2022 |
| | | EP 3109924 A1 | 28 December 2016 |
| | | EP 3109924 B1 | 03 October 2018 |
| | | KR 10-2475886 B1 | 08 December 2022 |
| | | US 2016-0380314 A1 | 29 December 2016 |
| KR 10-2020-0016620 A | 17 February 2020 | CN 112567558 A | 26 March 2021 |
| | | KR 10-2287332 B1 | 06 August 2021 |
| | | US 2021-0296702 A1 | 23 September 2021 |
| | | WO 2020-032378 A1 | 13 February 2020 |
| KR 10-2019-0035387 A | 03 April 2019 | CN 109560262 A | 02 April 2019 |
| | | CN 109560262 B | 23 May 2023 |
| | | KR 10-2473534 B1 | 05 December 2022 |
| | | US 10964937 B2 | 30 March 2021 |
| | | US 2019-0097220 A1 | 28 March 2019 |
| KR 10-2010-0120238 A | 12 November 2010 | CN 101960654 A | 26 January 2011 |
| | | CN 101960654 B | 06 March 2013 |
| | | EP 2246923 A1 | 03 November 2010 |
| | | JP 2012-092815 A1 | 16 August 2012 |
| | | US 2011-0008673 A1 | 13 January 2011 |
| | | US 8247096 B2 | 21 August 2012 |
| | | WO 2010-092815 A1 | 19 August 2010 |
| KR 10-2022-0058016 A | 09 May 2022 | None | |

Form PCT/ISA/210 (patent family annex) (July 2022)